# EUROPÄISCHE PATENTSCHRIFT

(11) **EP 2 631 837 B1**
(45) Veröffentlichungstag und Bekanntmachung des Hinweises auf die Patenterteilung: **14.08.2019**
(21) Anmeldenummer: 13152581.8
(22) Anmeldetag: 24.01.2013
(51) Int. Cl.: G06F 21/33, G06F 21/34, H04L 29/06

(54) **Verfahren zur Erzeugung eines Pseudonyms mit Hilfe eines ID-Tokens**
Method for generating a pseudonym with the help of an ID token
Procédé de création d'un pseudonyme à l'aide d'un jeton d'ID

(30) Priorität: 22.02.2012 DE 102012202744
(43) Veröffentlichungstag der Anmeldung: 28.08.2013
(60) Teilanmeldung: 19167314.4
(73) Patentinhaber: Bundesdruckerei GmbH, 10969 Berlin (DE)
(72) Erfinder: Kahlo, Christian, 07743 Jena (DE); Entschew, Enrico, 12435 Berlin (DE); Rüdiger, Mark, 15732 Eichwalde (DE); Sauer, Sascha, 07743 Jena (DE); Bruntsch, Christian, 07743 Jena (DE); Moszynski, Ivo, 10318 Berlin (DE)
(74) Vertreter: Richardt Patentanwälte PartG mbB

(56) Entgegenhaltungen:
- WO-A1-2005/032100
- US-A1- 2008 155 267
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- "Advanced Security Mechanisms for Machine Readable Travel Documents", , 27. Oktober 2008 (2008-10-27), Seiten 1-99, XP055059564, Bonn, Germany Gefunden im Internet: URL:https://www.bsi.bund.de/DE/Publikation en/TechnischeRichtlinien/tr03110/index_htm .html [gefunden am 2013-04-15]
- "Technische Richtlinie eID-Server" In: "Technische Richtlinie eID-Server", 6. Dezember 2011 (2011-12-06), Bundesamt für Sicherheit in der Informationstechnik, Bonn, Germany, XP055059662, Seiten 1-101, * Seite 11 * * Seite 13 * * Seite 15 - Seite 16 * * Seite 42 * * Seite 48 - Seite 73 *
- "http://de.wikipedia.org/w/index.php?title =Anonymisierung_und_Pseudonymisierung&oldi d=90797742", , 3. Juli 2011 (2011-07-03), XP055059836, Gefunden im Internet: URL:http://de.wikipedia.org/w/index.php?ti tle=Anonymisierung_und_Pseudonymisierung&o ldid=90797742 [gefunden am 2013-04-16]

## Beschreibung

Die Erfindung betrifft ein Verfahren zur Erzeugung eines Pseudonyms mit Hilfe eines ID-Tokens, ein Computerprogrammprodukt und ein Datenverarbeitungssystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 B4 ist ein Verfahren zum Lesen von Attributen aus einem ID-Token bekannt, bei dem ein ID-Provider-Computersystem über ein Netzwerk zumindest ein Attribut aus dem ID-Token ausliest, wobei es sich bei dem ID-Token zum Beispiel um ein Ausweisdokument handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen und verschiedene Verwendungen dieses Verfahrens bekannt.

In DE 10 2011 084 728 und DE 10 2011 089 580.9, deren Offenbarungsgehalte vollumfänglich hiermit zum Offenbarungsgehalt der vorliegenden Patentanmeldung gemacht werden, sind Verfahren zum Lesen von Attributen aus einem ID-Token unter Verwendung einer SAML-Request und einer SAML-Response offenbart.

Der elektronische Personalausweis der Bundesrepublik Deutschland (ePass) hat eine Pseudonym-Funktion, die auch als "Restricted Identifier" (RID) bezeichnet wird. Diese Pseudonym-Funktion ermöglicht ein anonymes Login auf Websites. Der ePass erzeugt eine pseudonyme Kartenkennung und übermittelt diese an die Website. Bei jedem weiteren Aufruf der Website wird die gleiche Kartenkennung übermittelt, sodass der Ausweisinhaber "wiedererkannt" wird.

Aus DE 10 2012 201 209.5 ist ein Verfahren zur Erzeugung eines Pseudonyms mit Hilfe eines ID-Tokens bekannt, wobei aus einem ID-Token-Pseudonym verschiedene Pseudonyme des Nutzers zur Verwendung gegenüber jeweils einem Dienst-Computersystem ableitbar sind.
Der Erfindung liegt demgegenüber die Aufgabe zugrunde, ein verbessertes Verfahren zur Erzeugung eines Pseudonyms zu schaffen, sowie ein entsprechendes Computerprogrammprodukt und ein Datenverarbeitungssystem.

Die technische Richtline des Bundesamt für Sicherheit in der Informationstechnik (BSI), TR-03127, Architektur elektronischer Personalausweis und elektronischer Aufenthaltstitel, Version 1.14, 27. Mai 2011 zeigt einen Ausweis zur Erzeugung einer dienste- und kartenspezifischen Kennung, wozu die Übermittlung eines Zertifikats des Dienst-Anbieters an den Ausweis erforderlich ist.

Aus Advanced Security Mechanisms for machine-readable travel documents, Bundesamt für Sicherheit in der Informationstechnik, Version 2.0, ist ebenfalls die sogenannte Restricted Identication mithilfe eines maschinenlesbaren Reisedokuments bekannt.

Aus Technische Richtlinie eID-Server, BSI TR-03130, Version 1.5 vom 06.12.2011 ist die elektronische Identitätsnachweis (elD-Funktion) des elektronischen Personalausweises der Bundesrepublik Deutschland bekannt, wobei eine funktionelle elD-SchnittsteIIe für Web-Anwendungen bereitgestellt wird. Auch diese erfordert für jeden Dienste-Anbieter ein eigenes Berechtigungszertifikat.

Aus WO 2005/032100 A1 ist ein Verfahren zur Erzeugung eindeutiger Nutzeridentitäten zur Nutzung zwischen verschiedenen Domänen eines Mobilfunknetzes bekannt.

Aus US 2008/0155267 A1 ist ein Identity Management System mit einem nicht vertrauenswürdigen Identity-Provider bekannt.

Die der Erfindung jeweils zugrunde liegenden Aufgaben werden mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur Erzeugung eines Pseudonyms mit Hilfe eines ID-Tokens geschaffen, wobei der ID-Token einem Nutzer zugeordnet ist. Der ID-Token hat einen geschützten Speicherbereich zur Speicherung eines privaten Schlüssels eines ersten asymmetrischen kryptografischen Schlüsselpaars, welches dem ID-Token zugeordnet ist und dessen Identität ausmacht.

Das zu erzeugende Pseudonym des Nutzers soll einem bestimmten Dienst-Computersystem einer Menge von Dienst-Computersystemen zugeordnet sein, aus denen der Nutzer eine Auswahl treffen kann. Die Dienst-Computersysteme der Menge sind beispielsweise bei einem ID-Provider-Computersystem registriert. Je nach Ausführungsform kann eine solche Registrierung aber auch entfallen. In letzterem Fall kann es sich bei der Menge von Dienst-Computersystemen um beliebige Computersysteme handeln, mit denen der Nutzer von seinem Nutzer-Computersystem aus eine Session aufbauen kann.

Nach Ausführungsformen der Erfindung ruft der Nutzer zunächst eine Internetseite eines ausgewählten Dienst-Computersystems auf, und zwar mit Hilfe des Internetbrowsers seines Nutzer-Computersystems über ein Netzwerk, wie zum Beispiel ein öffentliches Netzwerk, insbesondere das Internet. Daraufhin wird durch das Dienst-Computersystem eine Anforderung zur Eingabe eines Pseudonyms des Nutzers generiert, beispielsweise für ein Login des Nutzers auf dem Dienst-Computersystem oder zur Wiedererkennung des Nutzers.

Beispielsweise kann es sich bei dem ausgewählten Dienst-Computersystem um einen Onlineshop handeln, in dem unter dem Pseudonym Informationen zu dem zurückliegenden Verhalten des Nutzers gespeichert sind, um dem Nutzer nach dessen Wiedererkennung daraus abgeleitete Vorschläge oder Angebote für seinen nachfolgenden Einkauf zu unterbreiten. Insbesondere kann es sich hierbei um Produkte oder Dienstleistungen handeln, die online geliefert oder erbracht werden, insbesondere das Streaming oder Herunterladen von Dateien. Die Bezahlung erfolgt vorzugsweise durch ein anonymes Prepaid-Verfahren, um die Identität des Nutzers nicht durch den Bezahlvorgang offen legen zu müssen.

Ferner kann es sich bei dem Dienst-Computersystem um ein soziales Netzwerk handeln, in dem der Nutzer unter seinem Pseudonym registriert ist. Insbesondere ermöglicht es die Erfindung, dass der Nutzer an verschiedenen sozialen Netzwerken unter verschiedenen Pseudonymen teilnimmt.

In einer weiteren Ausführungsform bietet das Dienst-Computersystem einen email-Dienst, für den der Nutzer unter seinem Pseudonym registriert ist. Der Nutzer kann mit diesem email-Dienst nach dem Einloggen auf dem Dienst-Computersystem unter seinem Pseudonym Emails verschicken. Beispielsweise kann durch das Pseudonym die Email-Adresse des Nutzers für diesen email-Dienst ganz oder teilweise definiert sein.

Nach Ausführungsformen der Erfindung wird beispielsweise durch die o.g. Dienst-Computersysteme und ggf. weitere Dienst-Computersysteme, die ähnliche oder andere Dienste anbieten und über das Netzwerk zur Verfügung stellen, die Menge der Dienst-Computersysteme gebildet.

Die Anforderung des vom Nutzer aus dieser Menge ausgewählten Dienst-Computersystems zur Eingabe des Pseudonyms des Nutzers wird von dem betreffenden Dienst-Computersystem an das ID-Provider-Computersystem übertragen, und zwar über das Netzwerk. Diese Übertragung kann mit oder ohne Zwischenschaltung des Nutzer-Computersystems erfolgen.

Anschließend muss sich der Nutzer gegenüber seinem ID-Token authentifizieren, beispielsweise durch Eingabe seines Passworts, seiner PIN und/oder durch eine biometrische Authentifizierung. Ferner muss sich auch das ID-Provider-Computersystem gegenüber dem ID-Token authentifizieren, was mit Hilfe eines Zertifikats über das Netzwerk erfolgt.

In dem Zertifikat ist das Recht für einen Lesezugriff des ID-Provider-Computersystems auf den ID-Token spezifiziert, und zwar lediglich zum Lesen eines ID-Token-Pseudonyms. Ferner gehört zu dem Zertifikat ein öffentlicher Schlüssel eines zweiten asymmetrischen kryptografischen Schlüsselpaars, durch welches die Identität des ID-Provider-Computersystems gegeben ist. Der private Schlüssel des zweiten Schlüsselpaars wird in einem geschützten Speicherbereich des ID-Provider-Computersystems gespeichert.

Nach erfolgreicher Authentifizierung des Nutzers und des ID-Provider-Computersystems gegenüber dem Token und der erfolgreichen Prüfung des Zugriffsrechts des ID-Provider-Computersystems zum Lesen des ID-Token-Pseudonyms durch den ID-Token, wird durch den ID-Token das ID-Token-Pseudonym generiert, und zwar durch Ableitung aus dem privaten Schlüssel des ersten kryptografischen Schlüsselpaars und des öffentlichen Schlüssels des zweiten kryptografischen Schlüsselpaars, beispielsweise mit Hilfe des Elliptic Curve Diffie Hellman-Verfahrens.

Die Authentifizierung des Nutzers kann - je nach Ausführungsform - zu unterschiedlichen Zeitpunkten erfolgen. Beispielsweise kann der ID-Token so ausgebildet sein, dass sich zunächst der Nutzer authentifizieren muss, bevor eine Kommunikation mit dem ID-Token über dessen Schnittstelle überhaupt möglich ist, wie das bei dem elektronischen Personalausweis der Bundesrepublik Deutschland der Fall ist. Beispielsweise muss also erst die Authentifizierung des Nutzers erfolgen, bevor das Zertifikat (Berechtigungszertifikat) übertragen wird und bevor beispielsweise auch die sog. Terminal Authentication (Echtheit des ID-Providers), die Chip Authentication (Echtheit des Dokuments) sowie die Übertragung des Schlüssels, z.B. für eine Ende-zu-Ende-Verschlüsselung, erfolgen kann. In jedem Fall muss aber die Authentifizierung des Nutzers vor dem Übertragen des Pseudonyms von dem ID-Token an das ID-Provider-Computersystem erfolgen - der Zeitpunkt hierfür kann je nach Ausführungsform unterschiedlich gewählt werden.

Zum Auslesen des ID-Token-Pseudonyms wird ein Kanal mit Ende-zu-Ende-Verschlüsselung zwischen dem ID-Token und dem ID-Provider-Computersystem aufgebaut. Über diesen Kanal liest dann das ID-Provider-Computersystem das ID-Token-Pseudonym aus.

Nach Ausführungsformen der Erfindung prüft das ID-Provider-Computersystem dann, ob das ID-Token-Pseudonym valide ist. Hierzu greift das ID-Provider-Computersystem auf eine Sperrliste zu, in der die ID-Token-Pseudonyme gesperrter ID-Token gespeichert sind. Eine solche Sperrliste beinhaltet die ID-Token-Pseudonyme von ID-Token, deren Gültigkeitsdauer überschritten ist und von solchen, die als verloren oder gestohlen gemeldet worden sind. Die Sperrliste wird beispielsweise von einer sogenannten Certification Authority (CA) geführt, welche gleichzeitig auch Betreiberin des ID-Provider-Computersystems sein kann.

Nach Ausführungsformen der Erfindung greift das ID-Provider-Computersystem mit Hilfe des ID-Token-Pseudonyms auf einen Speicher zu, um mit Hilfe des ID-Token-Pseudonyms ein virtuelles Pseudonym desselben Nutzers aus dem Speicher auszulesen.

Unter einem "virtuellen Pseudonym" wird hier ein Pseudonym verstanden, welches dem Nutzer zugeordnet ist. Das virtuelle Pseudonym besteht vorzugsweise aus einer zufälligen Zeichenkette, die vorzugsweise dieselbe Länge und/oder mindestens dieselbe Entropie aufweist wie das ID-Token-Pseudonym desselben Nutzers.

Beispielsweise wird das virtuelle Pseudonym bei einer Initialisierung durch einen Zufallsgenerator erzeugt und mit dem zugeordneten ID-Token-Pseudonym in dem Speicher so abgespeichert, dass das ID-Provider-Computersystem mit Hilfe des ID-Token-Pseudonyms das virtuelle Pseudonym aus dem Speicher auslesen kann.
Das ID-Provider-Computersystem leitet anschließend ein für das ausgewählte Dienst-Computersystem spezifisches Pseudonym des Nutzers aus dem virtuellen Pseudonym des Nutzers ab. Diese Ableitung erfolgt vorzugsweise nur dann, wenn das ID-Token-Pseudonym nicht auf der Sperrliste beinhaltet ist. Die Ableitung kann mit Hilfe einer kryptografischen Funktion erfolgen, die aus dem virtuellen Pseudonym als Eingangsgröße und einer für das ausgewählte Dienst-Computersystem spezifischen weiteren Eingangsgröße das Pseudonym ableitet, so dass sich je nach ausgewähltem Dienst-Computersystem aus demselben virtuellen Pseudonym ein bestimmtes abgeleitetes Pseudonym ergibt. Mit anderen Worten ist die kryptografische Funktion also spezifisch für das ausgewählte Dienst-Computersystem, da sie je nach dem ausgewählten Dienst-Computersystem ein anderes Pseudonym ableitet.

Dies kann so erfolgen, dass für jedes der Dienst-Computersysteme eine andere kryptografische Funktion verwendet wird, oder dass für alle Dienst-Computersysteme dieselbe kryptografische Funktion für die Ableitung verwendet wird, wobei in diese kryptografische Funktion dann eine für das ausgewählte Dienst-Computersystem spezifische Kennung eingeht.

Dieses abgeleitete Pseudonym wird dann von dem ID-Provider-Computersystem signiert und an das ausgewählte Dienst-Computersystem übertragen. Das Dienst-Computersystem kann dann die Validität der Signatur prüfen und das empfangene Pseudonym für einen Log-in des Nutzers und/oder eine Wiedererkennung des Nutzers verwenden.

Ausführungsformen der Erfindung sind besonders vorteilhaft, da die Dienst-Computersysteme nicht jeweils eigene Zertifikate haben müssen, sondern das ein einziges Zertifikat, nämlich das des ID-Provider-Computersystems ausreichend ist. Der mit der Erzeugung und der zur Verfügungstellung von Zertifikaten für die Dienst-Computersysteme erforderliche informationstechnische, logistische und finanzielle Aufwand kann daher entsprechend reduziert werden.

Ausführungsformen der Erfindung sind besonders vorteilhaft, da die Zuordnung des ID-Token-Pseudonyms zu dem virtuellen Pseudonym auf der Ebene des ID-Provider-Computersystems ohne großen Aufwand einen Wechsel des ID-Tokens des Nutzers ermöglicht. Beispielsweise erhält der Nutzer turnusmäßig nach Ablauf der Gültigkeit seines ID-Tokens einen Ersatz-ID-Token, wie zum Beispiel einen neuen elektronischen Personalausweis. Ein anderer Grund für die Ausstellung eines Ersatz-ID-Tokens für den Nutzer kann sein, dass dessen ID-Token verlorengegangen oder gestohlen worden ist.
Der Ersatz-ID-Token hat zwangsläufig einen anderen privaten Schlüssel als der vorherige ID-Token des Nutzers, da der private Schlüssel grundsätzlich nicht ausgelesen werden kann und auch sonst nirgendwo außerhalb des ID-Tokens gespeichert ist. Aufgrund dessen wird durch den Ersatz-ID-Token aus dessen aktuellen privaten Schlüssel und dem öffentlichen Schlüssel des Zertifikats ein neues, das heißt aktuelles ID-Token-Pseudonym, definiert.

Das ID-Token-Pseudonym des vorherigen ID-Tokens des Nutzers wird in dem Speicher dann durch das aktuelle ID-Token-Pseudonym des Ersatz-ID-Tokens ersetzt, sodass nunmehr das aktuelle ID-Token-Pseudonym dem virtuellen Pseudonym zugeordnet ist. Da aber das virtuelle Pseudonym und nicht das jeweils aktuelle ID-Token-Pseudonym Grundlage für die Ableitung der Pseudonyme des Nutzers ist, weiche dieser jeweils gegenüber den Dienst-Computersystemen verwendet, ändert sich an diesen abgeleiteten Pseudonymen aufgrund der Ersetzung des ID-Tokens durch den Ersatz-ID-Token nichts.

Es ist also beispielsweise keine neue Registrierung oder dergleichen des Nutzers gegenüber den verschiedenen Dienst-Computersystemen erforderlich. Entsprechend kann bei nachfolgenden Ersetzungen des ID-Tokens vorgegangen werden, sodass der Nutzer zeitlich unbegrenzt dieselben Pseudonyme zur Verwendung gegenüber den Dienst-Computersystemen beibehalten kann. Nach Ausführungsformen der Erfindung wird eine Initialisierung durchgeführt, und zwar beispielsweise bevor der Nutzer den ID-Token erstmalig gegenüber den Dienst-Computersystemen verwendet. Hierzu werden beispielsweise die folgenden Schritte durchgeführt: Übertragung einer Anforderung zur Initialisierung des virtuellen Pseudonyms von dem Nutzer-Computersystem des Nutzers an das ID-Provider-Computersystem, verschlüsselte Übertragung einer Nutzerkennung von dem Nutzer-Computersystem an das ID-Provider-Computersystem, Erzeugung des ID-Token-Pseudonyms durch den ID-Token des Nutzers durch kryptografische Ableitung des ID-Token-Pseudonyms aus dem privaten Schlüssel und dem öffentlichen Schlüssel, temporäre Speicherung des ID-Token-Pseudonyms in dem ID-Token-Pseudonym, Übertragung des ID-Token-Pseudonyms von dem ID-Token an das ID-Provider-Computersystem mit Ende-zu-Ende-Verschlüsselung über das Netzwerk, Erzeugung des virtuellen Pseudonyms des Nutzers durch einen Zufallsgenerator, Speicherung des ID-Token-Pseudonyms mit dem zugeordneten virtuellen Pseudonym und der zugeordneten Nutzerkennung, sodass das ID-Provider-Computersystem mit Hilfe des ID-Token-Pseudonyms das virtuelle Pseudonym lesen kann und sodass das ID-Provider-Computersystem mit Hilfe der Nutzerkennung einen Schreibzugriff durchführen kann, um das ID-Token-Pseudonym zu aktualisieren.
Der Nutzer kann auch nach der erstmaligen Verwendung eine Registrierung durchführen, auch noch lange Zeit nach einer erstmaligen Verwendung.

Nach Ausführungsformen der Erfindung kann nachfolgend eine Aktualisierung des ID-Token-Pseudonyms aufgrund des Ersetzens des ID-Tokens durch einen Ersatz-ID-Token erfolgen. Hierzu werden beispielsweise die folgenden Schritte durchgeführt: Übertragung einer Anforderung zur Aktualisierung des ID-Token-Pseudonyms von dem Nutzer-Computersystem an das ID-Provider-Computersystem, verschlüsselte Übertragung der Nutzerkennung von dem Nutzer-Computersystem an das ID-Provider-Computersystem, Erzeugung des aktuellen ID-Token-Pseudonyms durch einen Ersatz-ID-Token des Nutzers durch kryptografische Ableitung des aktuellen ID-Token-Pseudonyms aus dem aktuellen privaten Schlüssel des Ersatz-ID-Tokens und dem öffentlichen Schlüssel, temporäre Speicherung des aktuellen ID-Token-Pseudonyms in dem Ersatz-ID-Token,Übertragung des aktuellen ID-Token-Pseudonyms von dem Ersatz-ID-Token an das ID-Provider-Computersystem mit Ende-zu-Ende-Verschlüsselung über das Netzwerk, Schreibzugriff auf den Speicher durch das ID-Provider-Computersystem mit Hilfe der Nutzerkennung, um das ID-Token-Pseudonym durch das aktuelle ID-Token-Pseudonym zu ersetzen.

Nach Ausführungsformen der Erfindung ist von weiterem besonderem Vorteil, dass der Datenverarbeitungsaufwand für die Prüfung der Validität stark reduziert werden kann, da die Sperrliste auf der Ebene der ID-Token-Pseudonyme erstellt und geprüft wird und nicht auf der Ebene der abgeleiteten Pseudonyme. Dies ist insbesondere dann von ganz besonderem Vorteil, wenn eine große Anzahl von ID-Token im Umlauf befindlich sind und eine große Anzahl von Nutzern diese gegenüber einer großen Anzahl von Dienst-Computersystemen nutzen. Die Sperrliste kann dann nämlich pro ID-Token nur maximal einen Eintrag beinhalten und nicht etwa einen Eintrag pro ID-Token pro Dienst-Computersystem. Dies verringert den Ressourcenaufwand bzw. die Latenzzeit für die Prüfung der Validität ganz erheblich.

Nach Ausführungsformen der Erfindung ist jedem der Dienst-Computersysteme eine separate Trapdoor-Funktion zugeordnet. Das ID-Provider-Computersystem wählt zur Ableitung des Pseudonyms die dem ausgewählten Dienst-Computersystem zugeordnete Trapdoor-Funktion und leitet dann mit Hilfe dieser Trapdoor-Funktion das Pseudonym ab. Beispielsweise kann die Trapdoor-Funktion als Hashfunktion ausgebildet sein.

Eine weitere Möglichkeit ist, dass zu jedem der Dienst-Computersysteme ein geheimer kryptografischer Schlüssel von dem ID-Provider-Computersystem gespeichert wird. In diesem Fall greift das ID-Provider-Computersystem auf den dem ausgewählten Dienst-Computersystem zugeordneten kryptografischen Schlüssel zu, um mit Hilfe zum Beispiel einer symmetrischen Verschlüsselung aus dem ID-Token-Pseudonym und dem kryptografischen Schlüssel das Pseudonym des Nutzers für das ausgewählte Dienst-Computersystem abzuleiten.

Ferner kann die Ableitung des Pseudonyms aus dem ID-Token-Pseudonym mit Hilfe eines Elliptic Curve Diffie Hellman-Verfahrens erfolgen, wobei das ID-Token-Pseudonym hierbei als privater Schlüssel dient.

Nach einer weiteren Ausführungsform der Erfindung dient eine Kennung des ausgewählten Dienst-Computersystems als Eingabeparameter für die kryptografische Funktion, wie zum Beispiel ein Uniform Ressource Locator (URL) der ausgewählten Internetseite oder ein anderer öffentlicher oder nichtöffentlicher Identifikator des Dienst-Computersystems, der beispielsweise anlässlich der Registrierung des Dienst-Computersystems durch das ID-Provider-Computersystem vergeben wird oder der zusammen mit der Anforderung von dem ausgewählten Dienst-Computersystem an das ID-Provider-Computersystem übertragen wird.

Nach einer Ausführungsform der Erfindung wird das Pseudonym durch ein HMAC-Verfahren berechnet, wobei das ID-Token-Pseudonym hierbei als geheimer Schlüssel dient. Das HMAC-Verfahren kann beispielsweise entsprechend RFC2104, Network Working Group, HMAC: Keyed-Hashing for Message Authentication, Februar 1997 implementiert werden. Besonders vorteilhaft ist hierbei, wenn zum Beispiel die URL des ausgewählten Dienst-Computersystems als Kennung in die Erzeugung des HMAC eingeht, da dann eine zuvorige Registrierung des Dienst-Computersystems bei dem ID-Provider-Computersystem nicht zwangsläufig erfolgen muss.

Nach einer Ausführungsform der Erfindung wird die Anforderung des Dienst-Computersystems als SAML-Request übertragen. Beispielsweise kann der SAML-Request einen Identifikator, d.h. eine sog. Session-ID, der aufgrund des Aufrufs der Internetseite aufgebauten Session beinhalten. Das ID-Provider-Computersystem generiert aufgrund des SAML-Requests eine entsprechende SAML-Response, die neben dem abgeleiteten Pseudonym diesen Identifikator der Session beinhaltet, sodass das ausgewählte Dienst-Computersystem die SAML-Response anhand der Session-ID der Session und damit dem Nutzer zuordnen kann.

In einem weiteren Aspekt betrifft die Erfindung ein Computerprogrammprodukt zur Ausführung eines erfindungsgemäßen Verfahrens.

In einem weiteren Aspekt betrifft die Erfindung ein Datenverarbeitungssystem mit einem ID-Provider-Computersystem.

Nach Ausführungsformen der Erfindung beinhaltet das ID-Provider-Computersystem Mittel zum Empfang einer Anforderung von einem ausgewählten Dienst-Computersystem einer Menge von Dienst-Computersystemen über ein Netzwerk, Mittel zur Authentifizierung des ID-Provider-Computersystems gegenüber einem ID-Token eines Nutzers über das Netzwerk mit einem Zertifikat, welches einen öffentlichen Schlüssel eines zweiten asymmetrischen kryptografischen Schlüsselpaars beinhaltet und in dem eine Leseberechtigung des ID-Provider-Computersystems für einen Lesezugriff zum Lesen eines ID-Token-Pseudonyms definiert ist, wobei die Mittel zur Authentifizierung zur Übertragung des Zertifikats an den ID-Token über das Netzwerk ausgebildet sind, um die Erzeugung eines ID-Token-Pseudonyms durch den ID-Token mittels einer kryptografische Ableitung des ID-Token-Pseudonyms aus dem privaten Schlüssel und dem öffentlichen Schlüssel zu ermöglichen, Mittel zur Durchführung eines Lesezugriffs auf das ID-Token-Pseudonym des ID-Tokens über das Netzwerk mit Ende-zu-Ende-Verschlüsselung, Mittel zur Prüfung der Validität des ID-Token-Pseudonyms, Mittel zur Ableitung eines dem ausgewählten Dienst-Computersystem zugeordneten Pseudonyms des Nutzers aus dem ID-Token-Pseudonym des Nutzers mittels einer für das ausgewählte Dienst-Computersystem spezifischen kryptografischen Funktion, Mittel zur Signierung des abgeleiteten Pseudonyms durch das ID-Provider-Computersystem, und Mittel zur Übertragung des signierten Pseudonyms von dem ID-Provider-Computersystem an das ausgewählte Dienst-Computersystem über das Netzwerk.

Nach Ausführungsformen der Erfindung beinhaltet das Datenverarbeitungssystem ferner einen oder mehrere der ID-Token und/oder ein oder mehrere der Dienst-Computersysteme und/oder das Nutzer-Computersystem.

Nach Ausführungsformen der Erfindung kann das Zertifikat des ID-Provider-Computersystems neben der Berechtigung zum Auslesen des ID-Token-Pseudonyms noch weitere Leserechte beinhalten, wie zum Beispiel zum Lesen des in dem ID-Token des Nutzers gespeicherten Geburtsdatums des Nutzers, um seitens des Dienst-Computersystems eine Überprüfung zu ermöglichen, ob der Nutzer das für die Erbringung des gewünschten Dienstes erforderliche Alter hat. Alternativ oder zusätzlich für eine solche Altersverifikation kann das Zertifikat ein Recht des ID-Provider-Computersystems zum Beispiel für eine Gemeindekennzahlverifikation beinhalten. Somit können auf kostengünstige Weise zum Beispiel online-Wahlverfahren realisiert werden.

Von weiterem besonderem Vorteil ist, dass durch die Dienst-Computersysteme kein Profil des Nutzerverhaltens erstellt werden kann, welches über das Nutzerverhalten gegenüber einzelnen der Dienst-Computersysteme hinausgeht, da aus den abgeleiteten Pseudonymen eines Nutzers nicht auf dessen Identität rückgeschlossen werden kann.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Nach Ausführungsformen der Erfindung ruft der Nutzer, der sich in Besitz des ID-Tokens befindet, mit Hilfe eines Internetbrowsers seines Nutzer-Computersystems eine Internetseite eines Dienst-Computersystems auf, wobei die Internetseite zur Eingabe einer Auswahl eines Dienstes ausgebildet ist.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smart Phone, mit einem üblichen Internetbrowser, wie zum Beispiel Microsoft Internet Explorer, Safari, Google Chrome, Firefox handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet.

Unter einem "Dienst-Computersystem" wird hier ein Computersystem verstanden, welches über eine Netzwerk-Schnittstelle zur Verbindung mit dem Netzwerk verfügt, sodass mit Hilfe des Internetbrowsers des Nutzer-Computersystems und anderer Nutzer-Computersysteme auf von dem Dienst-Computersystem gespeicherte oder generierte Internetseiten zugegriffen werden kann. Insbesondere kann es sich bei dem Dienst-Computersystem um einen Internetserver zur Verfügungstellung eines Online-Dienstes handeln.

Mit Hilfe des Internetbrowsers kann der Nutzer eine Internetseite des Dienst-Computersystems auswählen und auf das Nutzer-Computersystem laden. Der Nutzer kann daraufhin mit Hilfe des Internetbrowsers einen auf der Internetseite angebotenen Dienst auswählen und die entsprechende Auswahlentscheidung über den Internetbrowser eingeben, sodass diese Eingabe an das Dienst-Computersystem übertragen wird. Insbesondere erfolgt dies im Rahmen einer sogenannten Session, die zwischen dem Dienst-Computersystem und dem Internetbrowser für den Zugriff auf die Internetseite aufgebaut wird.
Nach Ausführungsformen der Erfindung erzeugt das Dienst-Computersystem einen SAML-Request. Das Dienst-Computersystem fungiert dabei also als SAML-Requester (vgl. Security Assertion Markup Language (SAML) V2.0 Technical Overview, OASIS, Committee Draft 02, 25. März 2008).

Unter einem "ID-Provider-Computersystem" wird hier ein Computersystem verstanden, welches dazu ausgebildet ist, das ID-Token-Pseudonym und - je nach Ausführungsform - zumindest ein Attribut aus dem ID-Token auszulesen.

Aufgrund des SAML-Request führt das ID-Provider-Computersystem einen Lesezugriff auf den ID-Token durch, um die das ID-Token-Pseudonym und ggf. die gemäß der Attributspezifizierung erforderlichen ein oder mehreren Attribute aus dem ID-Token auszulesen. Hierzu ist es zunächst erforderlich, dass sich sowohl das ID-Provider-Computersystem als auch der Nutzer gegenüber dem ID-Token authentifizieren, wie es an sich aus DE 10 2008 000 067 bekannt ist.

Das ID-Provider-Computersystem erzeugt dann eine SAML-Response, fungiert also als SAML-Responder. Die SAML-Response beinhaltet zumindest das abgeleitete Pseudonym und ggf. ein aus dem ID-Token ausgelesenes Attribut und ist signiert, sodass die SAML-Response über das Netzwerk übertragen werden kann, ohne dass ein Dritter die SAML-Response unentdeckt manipulieren könnte. Vorzugsweise beinhaltet die SAML-Response auch die Session-ID, welche das ID-Provider-Computersystem mit dem SAML-Request erhalten hat.

Das Dienst-Computersystem ordnet die SAML-Response mit Hilfe der in der SAML-Response beinhalteten Session-ID der zuvor getroffenen Auswahl des Dienstes, d.h. des Aufrufs der Internetseite durch den Nutzer zu. Dies ist besonders vorteilhaft, weil auf diese Art und Weise Auswahlen von Diensten des Dienst-Computersystems verschiedener Nutzer gleichzeitig verarbeitet werden können, weil aufgrund der Session-ID jeweils eine Zuordnung zwischen SAML-Request, SAML-Response und der eingegebenen Auswahl des Dienstes bzw. der Internetsession gegeben ist.

Das Dienst-Computersystem kann dann anhand der SAML-Response, welche das abgeleitete Pseudonym beinhaltet, prüfen, ob ein vorgegebenes Kriterium für die Erbringung des ausgewählten Dienstes für den Nutzer erfüllt ist, beispielsweise ob der Nutzer zu einer autorisierten oder registrierten Nutzergruppe gehört oder ob der Nutzer über ein ausreichendes Guthaben verfügt. Wenn das entsprechende Kriterium erfüllt ist, kann dann das Dienst-Computersystem den ausgewählten Dienst erbringen.

Unter einem "ID-Token-Pseudonym" wird hier ein Pseudonym verstanden, welches einem ID-Token und dessen Nutzer zugeordnet ist, und welches in dem ID-Token zumindest temporär gespeichert wird, um ein Auslesen aus dem ID-Token durch ein hierzu autorisiertes Terminal, insbesondere ein ID-Provider-Computersystem, zu ermöglichen. Insbesondere kann es sich bei dem ID-Token-Pseudonym um den Restricted Identifier des ePass handeln.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems,
- Figur 2: ein UML-Diagramm einer Ausführungsform eines erfindungsgemäßen Verfahrens,
- Figur 3: ein Flussdiagramm einer Ausführungsform eines erfindungsgemäßen Verfahrens zur Initialisierung des virtuellen Pseudonyms,
- Figur 4: ein Flussdiagramm einer Ausführungsform eines erfindungsgemäßen Verfahrens zur Aktualisierung des ID-Token-Pseudonyms.

Elemente der nachfolgenden Ausführungsformen, die einander entsprechen oder gleichen, werden jeweils mit denselben Bezugszeichen gekennzeichnet.

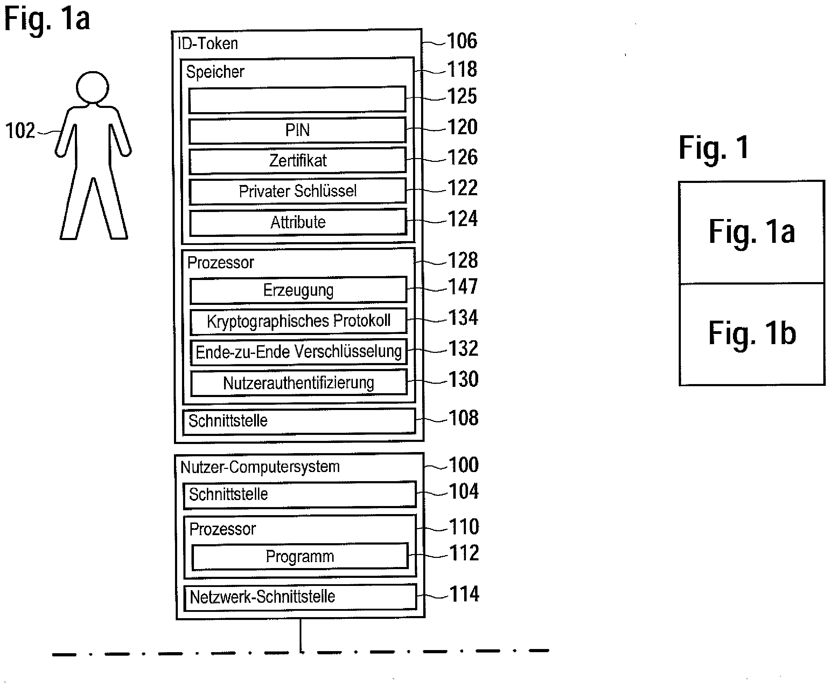

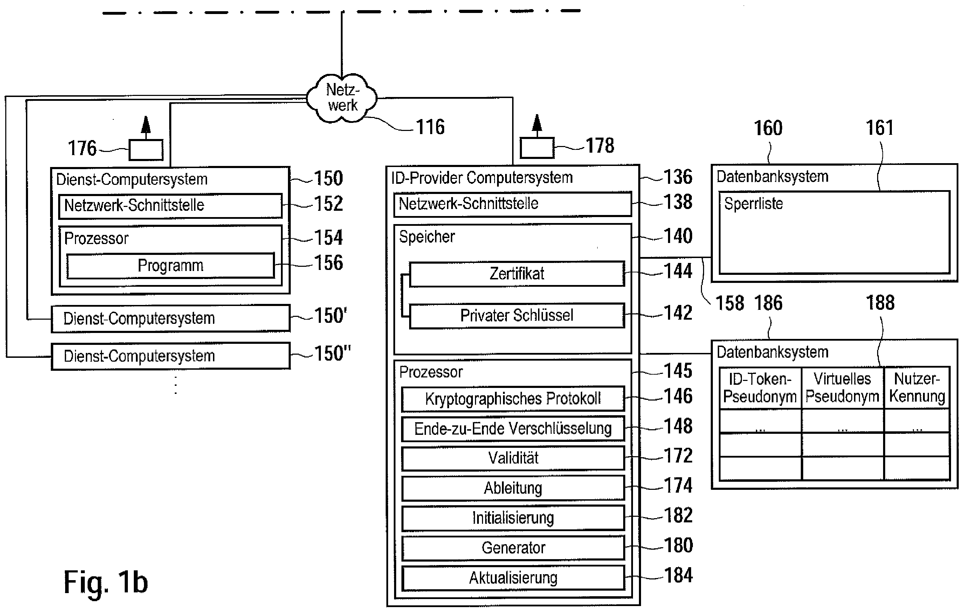

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122, 124 und 125. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der geschützte Speicherbereich 125 dient zur Speicherung eines ID-Token-Pseudonyms nachdem dieses durch Ausführung von Programminstruktionen 147 erzeugt worden ist. Die Speicherung des ID-Token-Pseudonyms in dem geschützten Speicherbereich 125 erfolgt dabei vorzugsweise nur temporär. Beispielsweise wird das ID-Token-Pseudonym aufgrund eines externen Lesezugriffs automatisch aus dem geschützten Speicherbereich 125 gelöscht.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132, 134 und 147. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute bzw. des in dem geschützten Speicherbereich 125 gespeicherten ID-Token-Pseudonyms nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen - 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 und/oder 125 ausgelesenen Daten. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln. Das Zertifikat 144 beinhaltet einen öffentlichen Schlüssel, der zusammen mit dem privater Schlüssel 142 ein asymmetrisches kryptographisches Schlüsselpaar bildet, welches die Identität des ID-Provider-Computersystems 136 definiert.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Erbringung einer Online-Dienstleistung, ausgebildet sein. Das Dienst-Computersystem 150 kann beispielsweise als Online-Warenhaus oder soziales Netzwerk ausgebildet sein. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert.

Durch die Programminstruktionen 112 wird auf dem Nutzer-Computersystem 100 ein Internetbrowser zur Verfügung gestellt. Mit Hilfe des Internetbrowsers kann der Nutzer 102 eine durch das Dienst-Computersystem 150 generierte Internetseite aufrufen, und zwar über das Netzwerk 116. Neben dem Dienst-Computersystem 150 können weitere Dienst-Computersysteme 150', 150" an das Netzwerk 116 angeschlossen sein, von denen der Nutzer in analoger Art und Weise jeweils auch eine Internetseite aufrufen kann, um eines dieser Dienst-Computersysteme hierdurch auszuwählen.

In dem Zertifikat 144 des ID-Provider-Computersystems 136 ist eine Leseberechtigung des ID-Provider-Computersystems 136 für einen Lesezugriff auf den ID-Token 106 spezifiziert, und zwar zum Lesen des ID-Token-Pseudonyms aus dem geschützten Speicherbereich 125 des ID-Tokens 106. Dieses Zertifikat 144 dient also zum Nachweis der Leseberechtigung für das ID-Provider-Computersystem 136, und zwar unabhängig davon, für welches der Dienst-Computersysteme 150, 150', 150", ... der Lesezugriff zum Lesen des ID-Token-Pseudonyms durchgeführt werden soll.

Für die Prüfung der Validität eines ausgelesenen ID-Token-Pseudonyms ist das ID-Provider-Computersystem 136 zum Beispiel über eine lokale Verbindung 158 mit einem Datenbanksystem 160 zum Beispiel einer sogenannten Certification Authority (CA) verbunden. In dem Datenbanksystem 160 wird eine Sperrliste 161 gespeichert, in der ID-Token-Pseudonyme von ID-Token gespeichert sind, welche als verloren oder gestohlen gemeldet worden sind oder deren Gültigkeitsdauer abgelaufen ist.

Das Datenbanksystem 160 und das ID-Provider-Computersystem 136 können innerhalb desselben Trust-Centers befindlich sein, um die Lokalverbindung 158 zu schützen. Alternativ kann die Sperrliste 161 auch zum Beispiel in dem Speicher 140 des ID-Provider-Computersystems 136 gespeichert sein. Zur Prüfung der Validität eines aus dem ID-Token 106 ausgelesenen ID-Token-Pseudonyms wird durch Ausführung von Programminstruktionen 172 durch den Prozessor 145 eine Anfrage generiert, welche das ID-Token-Pseudonym beinhaltet. Diese Anfrage wird von dem ID-Provider-Computersystem 136 über die lokale Verbindung 158 an das Datenbanksystem 160 gesendet. Das Datenbanksystem 160 prüft daraufhin, ob das mit der Anfrage empfangene ID-Token-Pseudonym in der Sperrliste 161 beinhaltet ist.

Wenn dies der Fall ist, so signalisiert das Datenbanksystem 160 als Antwort auf die Anforderung an das ID-Provider-Computersystem 136 über die lokale Verbindung 158, dass das ID-Token-Pseudonym nicht valide ist. Im gegenteiligen Fall signalisiert das Datenbanksystem 160 die Validität des ID-Token-Pseudonyms über die lokale Verbindung 158 an das ID-Provider-Computersystem 136.

Je nach Ausführungsform kann dieser Vorgang auch innerhalb des ID-Provider-Computersystems 136 ablaufen.

Das ID-Provider-Computersystem 136 hat ferner Programminstruktionen 174 zur Ableitung eines Pseudonyms für den Nutzer aus seinem virtuellen Pseudonym, wobei dieses abgeleitete Pseudonym einem bestimmten Dienst-Computersystem zugeordnet ist. Mit anderen Worten dient ein abgeleitetes Pseudonym ausschließlich zur Verwendung gegenüber einem bestimmten von dem Nutzer ausgewählten der Dienst-Computersysteme.

Hierzu wird durch die Programminstruktionen 174 eine für die Dienst-Computersysteme 150, 150', 150", ... jeweils spezifische kryptografische Funktion implementiert, das heißt eine kryptografische Funktion in die neben dem virtuellen Pseudonym die Auswahl eines bestimmten der Dienst-Computersysteme durch den Nutzer 102 eingeht.

Dies kann so erfolgen, dass durch die Programminstruktionen 174 für jedes der Dienst-Computersysteme eine eigene Einwegfunktion implementiert wird, wobei es sich bei den Einwegfunktionen um Hashfunktionen oder Trapdoor-Funktionen handeln kann.

Gemäß einer weiteren Ausführungsform werden durch das ID-Provider-Computersystem 136 verschiedene kryptografische Schlüssel für die Dienst-Computersysteme gespeichert, wobei jedem der Dienst-Computersysteme genau einer der kryptografischen Schlüssel zugeordnet ist. Durch Ausführung der Programminstruktionen 174 wird zur Ableitung des Pseudonyms auf den kryptografischen Schlüssel zugegriffen, welcher dem von dem Nutzer ausgewählten Dienst-Computersystem zugeordnet ist, um mit Hilfe dieses kryptografischen Schlüssels aus dem virtuellen Pseudonym durch Durchführung einer kryptografischen Operation ein für das ausgewählte Dienst-Computersystem spezifisches Pseudonym abzuleiten.

Nach einer weiteren Ausführungsform wird durch die Programminstruktionen 174 ein Elliptic Curve Diffie Hellman-Verfahren implementiert, wie es an sich aus dem Stand der Technik bekannt ist. Gemäß dieser Ausführungsform dient das virtuelle Pseudonym als geheimer Schlüssel zur Durchführung des EC-DH-Verfahrens seitens des ID-Provider-Computersystems 136. Als öffentlicher Schlüssel für die Durchführung des EC-DH-Verfahrens wird beispielsweise ein öffentlicher Schlüssel des ausgewählten Dienst-Computersystems verwendet. Entsprechend kann von dem ausgewählten Dienst-Computersystem das Pseudonym abgeleitet werden, indem der private Schlüssel des ausgewählten Dienst-Computersystems und der öffentliche Schlüssel des ID-Provider-Computersystems 136 hierfür verwendet wird. Dies hat den besonderen Vorteil, dass das abgeleitete Pseudonym nicht über das Netzwerk 116 übertragen werden muss, sondern lediglich öffentliche Domainparameter zwischen dem ausgewählten Dienst-Computersystem 150 und dem ID-Provider-Computersystem 136 kommuniziert werden.

Gemäß einer weiteren Ausführungsform wird durch die Programminstruktionen 174 ein Verfahren zur Berechnung eines HMAC implementiert, wie es an sich aus dem Stand der Technik bekannt ist. Gemäß dieser Ausführungsform wird das virtuelle Pseudonym als geheimer Schlüssel zur Erzeugung eines HMAC einer Kennung des ausgewählten Dienst-Computersystems verwendet. Dieser HMAC bildet dann das abgeleitete Pseudonym.

Bei der Kennung des ausgewählten Dienst-Computersystems kann es sich zum Beispiel um einen Identifikator des Dienst-Computersystems handeln, der zum Beispiel anlässlich einer Registrierung des Dienst-Computersystems durch das ID-Provider-Computersystem 136 vergeben wird. Besonders bevorzugt handelt es sich bei der Kennung um die URL zum Beispiel der von dem Nutzer 102 aufgerufenen Internetseite des ausgewählten Dienst-Computersystems.

Beispielsweise wird das abgeleitete Pseudonym RID' für ein ausgewähltes Dienst-Computersystem aus dem virtuellen Pseudonym (vP) durch eine Hash-Signatur von vP berechnet, wobei ein Hashwert der Kennung des Dienstanbieters zur Erzeugung der Hash-Signatur verwendet wird:

### RID'=Hashsignatur (vP, HASH(Kennung))

Gemäß einer Ausführungsform kann dies durch Verwendung einer URL des Dienst-Computersystems mit Hilfe von SHA-256 als Hashverfahren H erfolgen:

### RID'=HMAC-SHA256 (vP, H-SHA256(URL)).

Hierdurch erhält man je nach URL des ausgewählten Dienst-Computersystems jeweils ein für das ausgewählte Dienst-Computersystem spezifisches abgeleitetes Pseudonym RID'.

Das ID-Provider-Computersystem 136 hat einen Zufallsgenerator zur Erzeugung von virtuellen Pseudonymen. Der Zufallsgenerator kann durch eine Hardwarekomponente gebildet werden oder durch Programminstruktionen 180 zur Ausführung durch den Prozessor 145, wie es gemäß der Ausführungsform nach Figur 1 der Fall ist.

Zur Initialisierung eines virtuellen Pseudonyms eines Nutzers dienen Programminstruktionen 182 und zur Aktualisierung des ID-Token-Pseudonyms eines Nutzers Programminstruktionen 184, die beispielsweise durch den Prozessor 145 des ID-Provider-Computersystems 136 ausgeführt werden können.
Das ID-Provider-Computersystem 136 ist mit einem Datenbanksystem 186 verbunden oder beinhaltet das Datenbanksystem 186. Alternativ kann das Datenbanksystem 186 auch Bestandteil des Datenbanksystems 160 sein.

Das Datenbanksystem 186 dient zur Speicherung von Datenbankeinträgen, wobei jeder Datenbankeintrag einem der Nutzer, wie zum Beispiel dem Nutzer 102, zugeordnet ist. Der Datenbankeintrag eines der Nutzer beinhaltet dessen ID-Token-Pseudonym, das virtuelle Pseudonym dieses Nutzers und eine Nutzerkennung dieses Nutzers. Beispielsweise sind diese Datenbankeinträge in einer Tabelle 188 gespeichert. Das Datenbanksystem 186 ist so ausgebildet, dass das ID-Provider-Computersystem 136 mit Hilfe des ID-Token-Pseudonyms, z.B. der RID, eines Nutzers auf dessen virtuelles Pseudonym vP zugreifen kann, um mit Hilfe von vP das Pseudonym RID' abzuleiten.

Das Datenbanksystem 186 ist ferner so ausgebildet, dass das ID-Provider-Computersystem 136 mit Hilfe der Nutzerkennung auf den Datenbankeintrag des betreffenden Nutzers zugreifen kann, um das ID-Token-Pseudonym RID durch das aktuelle ID-Token-Pseudonym RID eines Ersatz-ID-Tokens desselben Nutzers zu ersetzen.

Im Betrieb wird beispielsweise wie folgt vorgegangen:
Mit Hilfe des Internetbrowsers des Nutzer-Computersystems 100 ruft der Nutzer 102 eine Internetseite eines der Dienst-Computersysteme, wie zum Beispiel des Dienst-Computersystems 150, auf, um dieses hierdurch auszuwählen. Das ausgewählte Dienst-Computersystem 150 erzeugt daraufhin eine Anforderung 176, die es über das Netzwerk 116 an das ID-Provider-Computersystem 136 sendet. Die Anforderung 176 kann die Session-ID der aufgrund des Aufrufs der Internetseite zwischen dem Internetbrowser des Nutzer-Computersystems 100 und dem Dienst-Computersystem 150 aufgebauten Session beinhalten sowie auch eine Kennung des Dienst-Computersystems 150, beispielsweise eine URL, insbesondere die URL der zuvor von dem Nutzer aufgerufenen Internetseite.

Die Anforderung 176 wird vorzugsweise durch das Dienst-Computersystem 150 signiert. Hierzu kann das Dienst-Computersystem 150 einen privaten Schlüssel speichern, der zu einem asymmetrischen kryptografischen Schlüsselpaar gehört, welcher das Dienst-Computersystem 150 identifiziert. Für die weiteren Dienst-Computersysteme 150', 150" kann es sich analog verhalten.

Zur Inanspruchnahme des ID-Provider-Computersystems 136 für die Erzeugung des Pseudonyms aufgrund der Anforderung 176 wird wie folgt vorgegangen:

### 1. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 2. Authentifizierung des ID-Provider-Computersystems 136 gegenüber dem ID-Token 106.

Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl.

Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl.

Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

### 3. Erzeugung und Lesen des ID-Token-Pseudonyms

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erzeugt der ID-Token 106 das ID-Token-Pseudonym und das ID-Provider-Computersystem 136 erhält eine Leseberechtigung zum Auslesen zumindest des ID-Token-Pseudonyms.

Durch Ausführung der Programminstruktionen 147 erzeugt der ID-Token 106 aus dem privaten Schlüssel, der in dem Speicherbereich 122 gespeichert ist, sowie dem öffentlichen Schlüssel des Zertifikats 144 das ID-Token-Pseudonym und speichert dieses in dem Speicherbereich 125. Diese kryptografische Ableitung kann beispielsweise mittels EC-DH durch die Programminstruktionen 147 erfolgen.

Aufgrund eines entsprechenden Lesekommandos, welches das ID-Provider-Computersystem 136 über die Verbindung an den ID-Token 106 sendet, wird das ID-Token-Pseudonym aus dem geschützten Speicherbereich 125 ausgelesen und durch Ausführung der Programminstruktionen 132 verschlüsselt. Zusätzlich kann noch ein weiteres Attribut gelesen werden, wenn in dem Zertifikat 144 die hierfür erforderlichen Leserechte eingeräumt werden, wie z.B. das Geburtsdatum.

Das verschlüsselte ID-Token-Pseudonym und ggf. das verschlüsselte Attribut werden über die Verbindung an das ID-Provider-Computersystem 136 übertragen und dort durch Ausführung der Programminstruktionen 148 entschlüsselt.

Dadurch erhält das ID-Provider-Computersystem 136 Kenntnis des aus dem ID-Token 106 ausgelesenen ID-Token-Pseudonyms und ggf. des Attributs.

### 4. Validitätsprüfung

Das ID-Provider-Computersystem 136 startet dann die Ausführung der Programminstruktionen 172, um die Validität des ausgelesenen ID-Token-Pseudonyms zu prüfen.

### 5. Zugriff auf das virtuelle Pseudonym

Wenn das ID-Token-Pseudonym nicht auf der Sperrliste 161 beinhaltet ist, so greift das ID-Provider-Computersystem 136 mit dem ID-Token-Pseudonym als Zugriffsschlüssel auf die Tabelle 188 zu, um das dem ID-Token-Pseudonym des Nutzers 102 zugeordnete virtuelle Pseudonym aus der Tabelle 188 auszulesen.

### 6. Ableitung des Pseudonyms

Nachfolgend wird die Ausführung der Programminstruktionen 174 gestartet, um ein Pseudonym des Nutzers zur Verwendung gegenüber dem ausgewählten Dienst-Computersystem aus dem virtuellen Pseudonym des Nutzers abzuleiten.

### 7. Übertragung des Pseudonyms

Zur Übertragung des so abgeleiteten Pseudonyms und gegebenenfalls des ausgelesenen Attributs generiert das ID-Provider-Computersystem 136 zum Beispiel eine Antwort 178, welche das abgeleitete Pseudonym und gegebenenfalls das Attribut beinhaltet. Vorzugsweise ist die Antwort 178 mit Hilfe des privaten Schlüssels 142 und des Zertifikats 144 signiert. Vorzugsweise beinhaltet die Antwort 178 auch die Session-ID, um die Zuordnung der Antwort 178 zu dem Nutzer 102 durch das Dienst-Computersystem 150 zu vereinfachen.

Vorzugsweise wird die Antwort 178 über das Nutzer-Computersystem 100 an das Dienst-Computersystem 150 gesendet, wobei die Weiterleitung der Antwort 178 von dem Nutzer-Computersystem 100 an das Dienst-Computersystem 150 nur dann erfolgt, nachdem der Nutzer 102 eine entsprechende Bestätigung in das Nutzer-Computersystem 100 eingegeben hat. Dies ermöglicht es dem Nutzer, den Inhalt der Antwort 178 zur Kenntnis zu nehmen bevor er oder sie die Weiterleitung an das ausgewählte Dienst-Computersystem 150 autorisiert. Da das Zertifikat 144 nicht spezifisch für das ausgewählte Dienst-Computersystem ist, sondern einheitlich für sämtliche Dienst-Computersysteme verwendet wird, ist vorzugsweise in der Antwort 178 eine Information bezüglich des ausgewählten Dienst-Computersystems beinhaltet.

Nach dem Empfang der Antwort 178 kann das Dienst-Computersystem 150 dann die Validität der Signatur der Antwort 178 prüfen und dann das in der Antwort 178 beinhaltete abgeleitete Pseudonym zum Beispiel für einen Login des Nutzers 102 oder für dessen Wiedererkennung verwenden.

Nach einer Ausführungsform der Erfindung handelt es sich bei der Anforderung 176 um einen SAML-Request. Dementsprechend handelt es sich bei der Antwort 178 um eine SAML-Response.

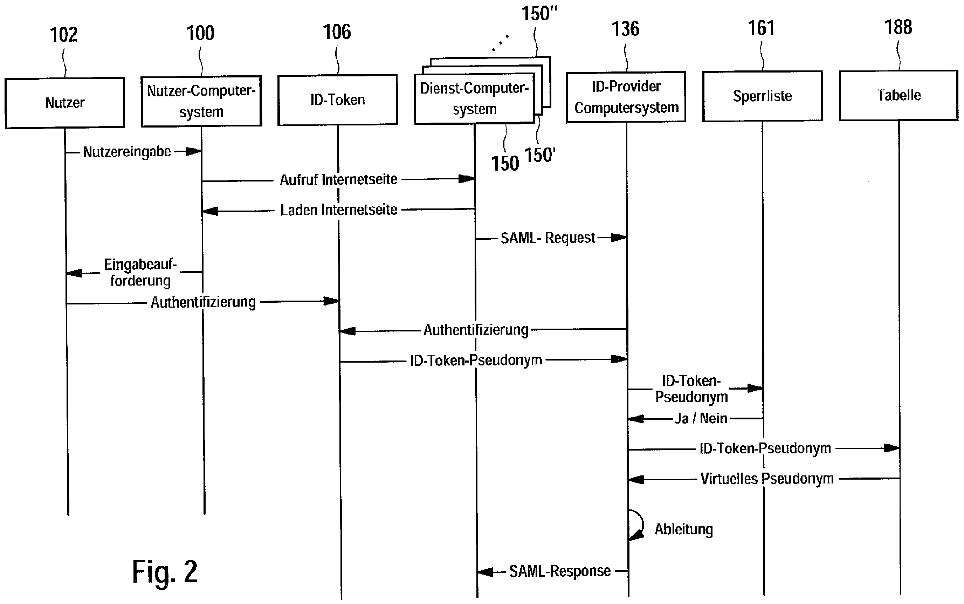

Die Figur 2 zeigt eine Ausführungsform eines erfindungsgemäßen Verfahrens anhand eines UML-Diagramms.

Durch eine Nutzereingabe eines Nutzers 102 in ein Nutzer-Computersystem 100, zum Beispiel durch Eingabe einer URL, wählt der Nutzer 102 ein bestimmtes Dienst-Computersystem aus, wie zum Beispiel das Dienst-Computersystem 150, von dem daraufhin auf das Nutzer-Computersystem 100 eine Internetseite geladen und auf einem Display des Nutzer-Computersystems 100 angezeigt wird.

Das Dienst-Computersystem 150 baut also mit dem Internetbrowser des Nutzer-Computersystems 100 eine Session auf, für welche das Dienst-Computersystem 150 eine Session-ID vergibt. Das Dienst-Computersystem 150 erzeugt aufgrund des Aufbaus der Session eine Anforderung, wie zum Beispiel in Form eines SAML-Requests für das Pseudonym des Nutzers, welches dieser gegenüber dem Dienst-Computersystem 150 verwendet.

Diese Anforderung kann die Session-ID sowie auch eine Kennung des Dienst-Computersystems 150 beinhalten, wie zum Beispiel die URL der von dem Nutzer 102 aufgerufenen Internetseite oder eine andere, das Dienst-Computersystem 150 identifizierende URL. Diese Anforderung, beispielsweise also in Form eines SAML-Request, sendet das Dienst-Computersystem 150 an das ID-Provider-Computersystem 136, zum Beispiel durch ein HTTP-Post als SOAP-Nachricht.

Der SAML-Request kann - wie in der Figur 2 dargestellt - unmittelbar von dem Dienst-Computersystem 150 an das ID-Provider-Computersystem 136 gesendet werden. Alternativ sendet das Dienst-Computersystem den SAML-Request an das Nutzer-Computersystem 100, von wo der SAML-Request durch einen sogenannten Redirect an das ID-Provider-Computersystem 136 weitergeleitet wird.

Beispielsweise beinhaltet die von dem Dienst-Computersystem 150 geladene Internetseite, welche von dem Internetbrowser des Nutzer-Computersystems 100 angezeigt wird, eine Eingabeaufforderung an den Nutzer 102, damit sich dieser gegenüber dem ID-Token 106 authentifiziert.

Der Nutzer 102 authentifiziert sich daraufhin gegenüber dem ID-Token 106, beispielsweise durch Eingabe seiner PIN.

Ferner startet das ID-Provider-Computersystem 136 eine sogenannte eID-Session, um das ID-Token-Pseudonym aus dem ID-Token 106 auszulesen. Hierzu muss sich das ID-Provider-Computersystem 136 zunächst gegenüber dem ID-Token 106 authentifizieren, und zwar mit Hilfe des Zertifikats 144 (vergleiche Figur 1). Nachdem die Authentifizierung erfolgreich durchgeführt worden ist, erzeugt der ID-Token 106 aufgrund des Empfangs des Zertifikats 144 ein ID-Token-Pseudonym durch Ableitung aus dem privaten Schlüssel 122 des ID-Tokens 106 sowie aus dem öffentlichen Schlüssel des Zertifikats 144. Das so von dem ID-Token 106 erzeugte ID-Token-Pseudonym kann dann von dem ID-Provider-Computersystem 136 über einen geschützten Kanal mit Ende-zu-Ende-Verschlüsselung aus dem ID-Token 106 ausgelesen werden.

Die Authentifizierung des Nutzers 102 bzw. des ID-Provider-Computersystems 136 gegenüber dem ID-Token 106 kann zum Beispiel mit Hilfe des Extended Access Control-Protokolls durchgeführt werden, so wie es von der Internationalen Luftfahrtbehörde (ICAO) spezifiziert ist. Um den Nutzer 102 über den Zweck des Lesezugriffs auf den ID-Token 106 zu informieren, kann von dem ID-Provider-Computersystem 136 eine entsprechende Information an das Nutzer-Computersystem 100 gesendet werden, und zwar beispielsweise in dem Feld "Transactioninfo" gemäß dem EAC-Protokoll. Das Feld TransactionInfo ist in BSI - Technical Guideline, eCard-API-Framework - Protocols, BSI TR-03112-7, Version: 1.1.1, 23.05.2011Das von dem ID-Provider-Computersystem 136 an den ID-Token 106 gesendete Zertifikat wird für die Durchführung des EAC-Protokolls verwendet. Hierzu verifiziert der ID-Token 106 das Zertifikat und speichert den öffentlichen Schlüssel des Zertifikats zum Beispiel in seinen RAM. Daraufhin initiiert das ID-Provider-Computersystem 136 die Erzeugung des ID-Token-Pseudonyms, indem es eine entsprechende Anforderung an den ID-Token 106 zum Beispiel in Form einer sogenannten APDU sendet. Der ID-Token 106 erzeugt daraufhin aus dem öffentlichen Schlüssel des Zertifikats und seinem privaten Schlüssel das ID-Token-Pseudonym.

Nach Erhalt des ID-Token-Pseudonyms, das heißt beispielsweise des sogenannten RID, prüft das ID-Provider-Computersystem 136, ob das ID-Token-Pseudonym auf der Sperrliste 161 ist. Wenn das ID-Token-Pseudonym auf der Sperrliste 161 ist, so bricht der Vorgang an dieser Stelle mit einer Fehlermeldung ab.

Im gegenteiligen Fall greift das ID-Provider-Computersystem 136 mit Hilfe des ID-Token-Pseudonyms auf die Tabelle 188 zu, um das dem ID-Token-Pseudonym zugeordnete virtuelle Pseudonym aus der Tabelle 188 auszulesen. Das ID-Provider-Computersystem 136 leitet dann aus dem virtuellen Pseudonym das Pseudonym des Nutzers zur Verwendung gegenüber dem ausgewählten Dienst-Computersystem 150 durch eine kryptografische Operation ab, die für das Dienst-Computersystem 150 spezifisch ist. Mit anderen Worten führt die von dem ID-Provider-Computersystem 136 ausgeführte kryptografische Operation für jedes der Dienst-Computersysteme zu einem anderen abgeleiteten Pseudonym und zwar auf der Basis desselben virtuellen Pseudonyms. Diese Ableitung erfolgt beispielsweise durch Ausführung der Programminstruktionen 174 gemäß Ausführungsform der Fig. 1

Das ID-Provider-Computersystem 136 erzeugt dann eine Antwort, wie zum Beispiel eine SAML-Response, die mittels SOAP/HTTP-Post an das Dienst-Computersystem 150 gesendet wird, und zwar entweder unmittelbar oder über das Nutzer-Computersystem 100. Das Dienst-Computersystem 150 verwendet dann das mit der SAML-Response empfangene abgeleitete Pseudonym zur Wiedererkennung oder zum Login des Nutzers 102.

Zusätzlich zu dem Lesen des ID-Token-Pseudonyms kann das Zertifikat 144 auch eine Leseberechtigung zum zusätzlichen Lesen eines Attributs des Nutzers 102 aus dem ID-Token 106 beinhalten, wie zum Beispiel dessen Geburtsdatum oder Geburtsjahr oder eine Information zu dessen Wohnort. Ein solches zusätzliches Attribut kann dann von dem ID-Provider-Computersystem 136 zusätzlich zu dem ID-Token-Pseudonym aus dem ID-Token 106 ausgelesen und über die SAML-Response an das Dienst-Computersystem 150 übertragen werden.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass das ihm von dem ID-Provider-Computersystem 136 mitgeteilten abgeleitete Pseudonym und ggf. das Attribut des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

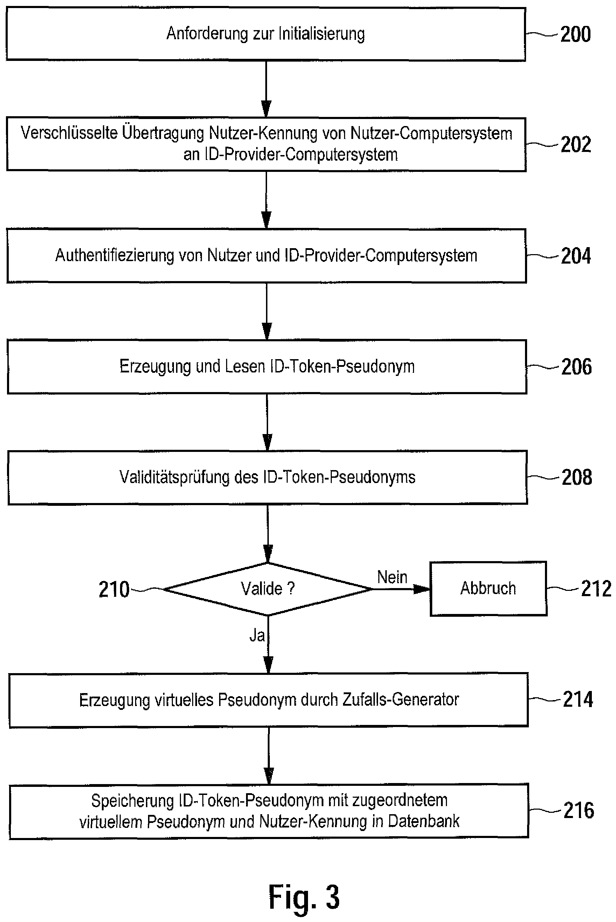

Die Figur 3 zeigt ein Verfahren zur Initialisierung des virtuellen Pseudonyms eines Nutzers, zum Beispiel des Nutzers 102 (vergleiche Figur 1). Die Durchführung der das ID-Provider-Computersystem 136 betreffenden Schritte dieses Verfahrens erfolgt beispielsweise durch Ausführung der Programminstruktionen 182.

In dem Schritt 200 wird in das ID-Provider-Computersystem 136 eine Anforderung zur Initialisierung des virtuellen Pseudonyms eingegeben. Dies kann so erfolgen, dass der Nutzer mit Hilfe eines Nutzer-Computersystems 100 eine Internetseite des ID-Provider-Computersystems 136 aufruft. Beispielsweise erfolgt dies mit Hilfe eines HTTPS Protokolls, um die Kommunikation zwischen dem Nutzer-Computersystem 100 und dem ID-Provider-Computersystem 136 zu verschlüsseln.

Der Nutzer 102 gibt dann eine Nutzerkennung in das Nutzer-Computersystem 100 ein, welche verschlüsselt, beispielsweise über HTTPS, an das ID-Provider-Computersystem 136 übertragen wird. Bei der Nutzerkennung kann es sich beispielsweise um einen von dem Nutzer gewählten Nutzernamen und ein Passwort handeln. Eine solche Nutzername/Passwort-Kombination kann auch durch das ID-Provider-Computersystem 136 generiert und über HTTPS an das Nutzer-Computersystem 100 übertragen werden. Alternativ oder zusätzlich kann ein biometrisches Merkmal des Nutzers als Nutzerkennung verwendet werden oder in diese eingehen.
In den nachfolgenden Schritten 204 und 206 wird dann das ID-Token-Pseudonym nach zuvoriger Authentifizierung durch den ID-Token 106 erzeugt und an das ID-Provider-Computersystem 136 übertragen, und zwar entsprechend den obigen Schritten 1. bis 3. der Ausführungsform gemäß Figur 1. Hierzu wird zusätzlich zu dem verschlüsselten Nachrichtenkanal, der beispielsweise mittels HTTPS zwischen dem Nutzer-Computersystem 100 und dem ID-Provider-Computersystem 136 aufgebaut worden ist, der Kanal mit Ende-zu-Ende-Verschlüsselung zwischen dem ID-Token 106 und dem ID-Provider-Computersystem 136 aufgebaut, über welchem das ID-Token-Pseudonym übertragen wird.

In dem Schritt 208 wird das ID-Token-Pseudonym auf Validität geprüft, und zwar beispielsweise gemäß dem obigen Schritt 4. der Ausführungsform gemäß Figur 1.

In dem Schritt 210 wird entschieden, ob das ID-Token-Pseudonym valide ist. Ist dies nicht der Fall, so erfolgt in dem Schritt 212 ein Abbruch. Im gegenteiligen Fall in dem Schritt 214 ein virtuelles Pseudonym für den Nutzer 102 durch einen Zufallsgenerator erzeugt, beispielsweise in dem hierzu die Ausführung der Programminstruktionen 180 durch die Programminstruktionen 182 gestartet wird.

Vorzugsweise ist der Zufallsgenerator so ausgebildet, dass das virtuelle Pseudonym dieselbe Länge wie das ID-Token-Pseudonym aufweist; vorzugsweise hat das virtuelle Pseudonym zumindest die gleiche oder eine höhere Entropie als das ID-Token-Pseudonym. Dies kann insbesondere dann erreicht werden, wenn es sich bei dem Zufallsgenerator um eine Hardwarekomponente handelt, wie zum Beispiel eine Binary Symmetric Source (BSS).

Beispielsweise kann es sich bei dem Zufallsgenerator um eine digitale Schaltung handeln, welches eine zufällige Zeichenkette einer hohen oder maximalen Entropie abgibt, vergleiche zum Beispiel IEEE Spektrum, September 2011, Behind Intel's New Random-Number Generator. Dies ist besonders vorteilhaft, da das virtuelle Pseudonym sogar eine höhere Entropie als das zugeordnete ID-Token-Pseudonym aufweisen kann.

In dem Schritt 216 wird dann ein Datenbankeintrag in das Datenbanksystem 186 geschrieben, welcher das ID-Token-Pseudonym mit dem zugeordneten virtuellen Pseudonym sowie die Nutzerkennung des Nutzers beinhaltet.

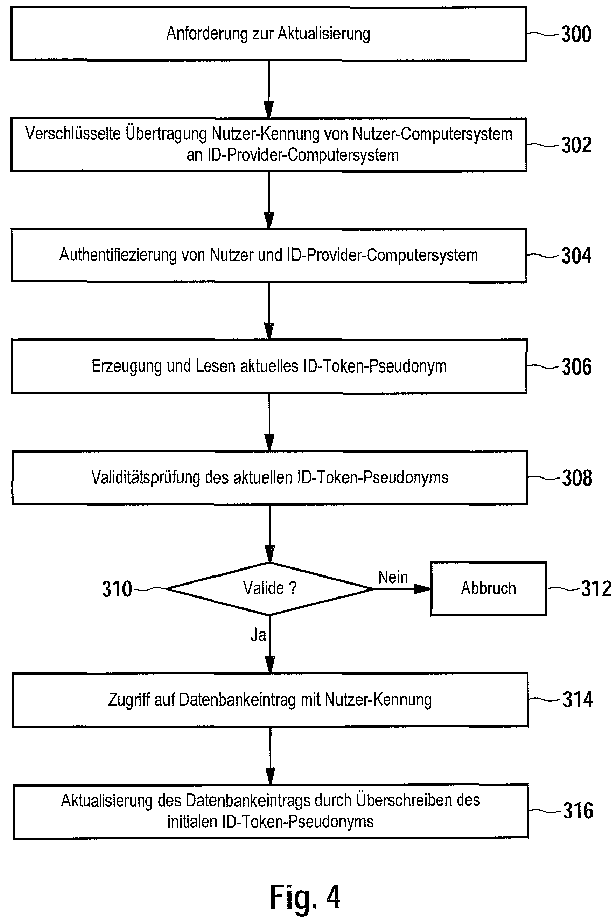

Die Figur 4 zeigt ein Verfahren zur Aktualisierung des ID-Token-Pseudonyms. Eine solche Aktualisierung ist dann erforderlich, wenn das ID-Token 106 des Nutzers 102 durch ein Ersatz-ID-Token ersetzt wird, welches dieselbe Struktur wie das ID-Token 106 aufweist, aber einen anderen privaten Schlüssel in seinem Speicherbereich 122 hat. Aufgrund des geänderten, aktuellen privaten Schlüssels ergibt sich zwangsläufig in Kombination mit dem öffentlichen Schlüssel des ID-Provider-Computersystems 136 ein neues, aktuelles ID-Token-Pseudonym des Nutzers 102.

Zur Durchführung der Aktualisierung wird beispielsweise wie folgt vorgegangen, wobei dies durch Ausführung der Programminstruktionen 184 erfolgen kann, sowei das ID-Provider-Computersystem 136 betroffen ist:
In dem Schritt 300 wird eine Anforderung zur Aktualisierung des ID-Token-Pseudonyms eines der Nutzer, das heißt beispielsweise des Nutzers 102, in das ID-Provider-Computersystem 136 eingegeben. Dies kann so erfolgen, dass der Nutzer 102 mit Hilfe seines Nutzer-Computersystems 100 eine Internetseite des ID-Provider-Computersystems 136 aufruft. Es wird dann ein verschlüsselter Nachrichtenkanal zum Beispiel mittels HTTPS zwischen dem Nutzer-Computersystem 100 und dem ID-Provider-Computersystem 136 aufgebaut.

Der Nutzer 102 gibt hierüber in das Nutzer-Computersystem 100 seine Nutzerkennung ein, das heißt beispielsweise seinen Nutzernamen und sein Passwort. Diese Nutzerkennung wird über den verschlüsselten Nachrichtenkanal von dem Nutzer-Computersystem 100 an das ID-Provider-Computersystem 136 übertragen, um den Nutzer 102 auf dem ID-Provider-Computersystem 136 einzuloggen.

Die nachfolgenden Schritte 304 - 308 werden wiederum analog zu den Schritten 204 - 208 gemäß Figur 3 und den Schritten 1 - 4 gemäß Ausführungsform nach Figur 1 durchgeführt, sodass das ID-Provider-Computersystem 136 das aktuelle ID-Token-Pseudonym erhält, welches der Ersatz-ID-Token des Nutzers 102 erzeugt hat. Im Unterschied zu den Ausführungsformen gemäß Figuren 1 und 3 wird also der Ersatz-ID-Token des Nutzers 102 für die Durchführung der Schritte 304 und 306 verwendet, da ja der ursprüngliche ID-Token 106 nicht mehr im Besitz des Nutzers 102 und/oder nicht mehr gültig ist.

Wenn das aktuelle ID-Token-Pseudonym valide ist, erfolgt in dem Schritt 314 ein Schreibzugriff auf das Datenbanksystem 186 mit der Nutzerkennung als Schlüssel, um das ID-Token-Pseudonym des Nutzers 102 durch das aktuelle ID-Token-Pseudonym zu überschreiben. Diese Aktualisierung erfolgt in dem Schritt 316.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 125: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 147: Programminstruktionen
- 148: Programminstruktionen
- 149: Programminstruktionen
- 150: Dienst-Computersystem
- 150': Dienst-Computersystem
- 150": Dienst-Computersystem
- 152: Netzwerk-Schnittstelle
- 154: Prozessor
- 156: Programminstruktionen
- 158: lokale Verbindung
- 160: Datenbanksystem
- 161: Sperrliste
- 172: Programminstruktionen
- 174: Program minstruktionen
- 176: Anforderung
- 178: Antwort
- 180: Programminstruktionen
- 182: Programminstruktionen
- 184: Programminstruktionen
- 186: Datenbanksystem
- 188: Tabelle

## Patentansprüche

1. Verfahren zur Erzeugung eines Pseudonyms mit Hilfe eines ID-Tokens (106) für einen Nutzer (102), wobei der ID-Token dem Nutzer zugeordnet ist und der ID-Token einen geschützten Speicherbereich (122) zur Speicherung zumindest eines privaten Schlüssels eines dem ID-Token zugeordneten ersten asymmetrischen kryptografischen Schlüsselpaars aufweist, und wobei das Pseudonym des Nutzers einem Dienst-Computersystem aus einer Menge von Dienst-Computersystemen (150, 150', 150",...) zugeordnet ist, mit folgenden Schritten:
- Aufruf einer Internetseite eines von dem Nutzer ausgewählten der Dienst-Computersysteme mit einem Internetbrowser (112) eines Nutzer-Computersystems (100) über ein Netzwerk (116),
- Erzeugung einer Anforderung (176) durch das ausgewählte Dienst-Computersystem für das Pseudonym des Nutzers,
- Übertragung der Anforderung von dem Dienst-Computersystem an ein ID-Provider-Computersystem (136) über das Netzwerk,
- Erzeugung eines ID-Token-Pseudonyms (RID) durch den ID-Token durch kryptografische Ableitung des ID-Token-Pseudonyms aus dem privaten Schlüssel des ersten asymmetrischen kryptografischen Schlüsselpaars und einem öffentlichen Schlüssel eines zweiten asymmetrischen kryptografischen Schlüsselpaars,
- temporäre Speicherung des ID-Token-Pseudonyms in dem ID-Token,
- Übertragung des ID-Token-Pseudonyms von dem ID-Token an das ID-Provider-Computersystem mit Ende-zu-Ende-Verschlüsselung über das Netzwerk,
- Zugriff auf einen Speicher (186, 188) durch das ID-Provider-Computersystem mit Hilfe des ID-Token-Pseudonyms (RID), um ein dem ID-Token-Pseudonym zugeordnetes virtuelles Pseudonym (vP) des Nutzers zu lesen, wobei es sich bei dem virtuellen Pseudonym um eine durch einen Zufallsgenerator erzeugte zufällige Zeichenkette handelt, die zumindest dieselbe oder eine höhere Entropie als das ID-Token-Pseudonym hat,
- Ableitung des dem ausgewählten Dienst-Computersystem zugeordneten Pseudonyms (RID') des Nutzers aus dem virtuellen Pseudonym des Nutzers mittels einer für das ausgewählte Dienst-Computersystem spezifischen kryptografischen Funktion durch das ID-Provider-Computersystem, wobei jedem der Dienst-Computersysteme als spezifische kryptografische Funktion eine Einwegfunktion zugeordnet ist, sodass das ID-Provider-Computersystem für die Ableitung des Pseudonyms (RID') auf die dem ausgewählten Dienst-Computersystem zugeordnete Einwegfunktion zugreift, um mit Hilfe dieser Einwegfunktion aus dem ID-Token-Pseudonym das Pseudonym abzuleiten,
- Signierung des abgeleiteten Pseudonyms durch das ID-Provider-Computersystem,
- Übertragung des signierten Pseudonyms von dem ID-Provider-Computersystem an das ausgewählte Dienst-Computersystem über das Netzwerk,
mit folgenden weiteren Schritten:
- Authentifizierung des Nutzers gegenüber dem ID-Token,
- Authentifizierung des ID-Provider-Computersystems gegenüber dem ID-Token über das Netzwerk mit einem Zertifikat (144), welches den öffentlichen Schlüssel des zweiten asymmetrischen kryptografischen Schlüsselpaars beinhaltet, das dem ID-Provider-Computersystem zugeordnet ist, und in dem eine Leseberechtigung des ID-Provider-Computersystems für einen Lesezugriff zum Lesen des ID-Token-Pseudonyms aus dem ID-Token definiert ist,
- nach erfolgreicher Authentifizierung des Nutzers und des ID-Provider-Computersystems gegenüber dem ID-Token, Lesezugriff des ID-Provider-Computersystems auf das in dem ID-Token gespeicherte ID-Token-Pseudonym über das Netzwerk,
wobei aufgrund des Lesezugriffs die Übertragung des ID-Token-Pseudonyms von dem ID-Token an das ID-Provider-Computersystem erfolgt.

2. Verfahren nach Anspruch 1, wobei die zufällige Zeichenkette dieselbe Länge wie das ID-Token-Pseudonym hat.

3. Verfahren nach Anspruch 1 oder 2, wobei in dem Speicher zumindest eine Datenbanktabelle (188) zur Speicherung von ID-Token-Pseudonymen verschiedener Nutzer und den jeweils zugeordneten virtuellen Pseudonymen gespeichert ist.

4. Verfahren nach Anspruch 3, wobei die zumindest eine Datenbanktabelle so ausgebildet ist, dass darauf durch das ID-Provider-Computersystem mit Hilfe einer Nutzerkennung der Nutzer zugegriffen werden kann, um das ID-Token-Pseudonym des betreffenden Nutzers in der zumindest einen Datenbanktabelle zu aktualisieren.

5. Verfahren nach einem der vorhergehenden Ansprüche, wobei zur Initialisierung des virtuellen Pseudonyms die folgenden Schritte durchgeführt werden:
- Übertragung einer Anforderung zur Initialisierung des virtuellen Pseudonyms von dem Nutzer-Computersystem des Nutzers an das ID-Provider-Computersystem,
- verschlüsselte Übertragung einer Nutzerkennung von dem Nutzer-Computersystem an das ID-Provider-Computersystem,
- Erzeugung des ID-Token-Pseudonyms durch den ID-Token des Nutzers durch kryptografische Ableitung des ID-Token-Pseudonyms aus dem privaten Schlüssel des ersten asymmetrischen kryptografischen Schlüsselpaars und dem öffentlichen Schlüssel des zweiten asymmetrischen kryptografischen Schlüsselpaars,
- temporäre Speicherung des ID-Token-Pseudonyms in dem ID-Token,
- Übertragung des ID-Token-Pseudonyms von dem ID-Token an das ID-Provider-Computersystem mit Ende-zu-Ende-Verschlüsselung über das Netzwerk,
- Erzeugung des virtuellen Pseudonyms des Nutzers durch den Zufallsgenerator,
- Speicherung des ID-Token-Pseudonyms mit dem zugeordneten virtuellen Pseudonym und der zugeordneten Nutzerkennung, sodass das ID-Provider-Computersystem mit Hilfe des ID-Token-Pseudonyms das virtuelle Pseudonym lesen kann und sodass das ID-Provider-Computersystem mit Hilfe der Nutzerkennung einen Schreibzugriff durchführen kann, um das ID-Token-Pseudonym zu aktualisieren.

6. Verfahren nach Anspruch 5, wobei zur Aktualisierung des ID-Token-Pseudonyms folgende Schritte durchgeführt werden:
- Übertragung einer Anforderung zur Aktualisierung des ID-Token-Pseudonyms von dem Nutzer-Computersystem an das ID-Provider-Computersystem,
- verschlüsselte Übertragung der Nutzerkennung von dem Nutzer-Computersystem an das ID-Provider-Computersystem,
- Erzeugung des aktuellen ID-Token-Pseudonyms durch einen Ersatz-ID-Token des Nutzers durch kryptografische Ableitung des aktuellen ID-Token-Pseudonyms aus dem aktuellen privaten Schlüssel eines asymmetrischen kryptografischen Schlüsselpaars des Ersatz-ID-Tokens und dem öffentlichen Schlüssel des zweiten asymmetrischen kryptografischen Schlüsselpaars,
- temporäre Speicherung des aktuellen ID-Token-Pseudonyms in dem Ersatz-ID-Token,
- Übertragung des aktuellen ID-Token-Pseudonyms von dem Ersatz-ID-Token an das ID-Provider-Computersystem mit Ende-zu-Ende-Verschlüsselung über das Netzwerk,
- Schreibzugriff auf den Speicher durch das ID-Provider-Computersystem mit Hilfe der Nutzerkennung, um das ID-Token-Pseudonym durch das aktuelle ID-Token-Pseudonym zu ersetzen.

7. Verfahren nach einem der vorhergehenden Ansprüche, mit folgendem weiteren Schritt: Prüfung der Validität des ID-Token-Pseudonyms durch das ID-Provider-Computersystem, wobei die Ableitung oder die Erzeugung des virtuellen Pseudonyms oder die Aktualisierung des ID-Token-Pseudonyms nur dann erfolgt, wenn das übertragene ID-Token-Pseudonym valide ist.

8. Verfahren nach einem der vorhergehenden Ansprüche, wobei es sich bei der Einwegfunktion um eine Hashfunktion oder eine Trapdoor-Funktion handelt, wobei die Ableitung des Pseudonyms insbesondere mit Hilfe eines Elliptic Curve Diffie Hellman (EC-DH) Verfahren erfolgt und das ID-Token-Pseudonym für die Durchführung des Elliptic Curve Diffie Hellman Verfahrens als geheimer Schlüssel dient oder wobei das Pseudonym insbesondere durch Berechnung eines Hash-based Message Authentication Code (HMAC) abgeleitet wird, wobei das ID-Token-Pseudonym als geheimer Schlüssel zur Erzeugung des HMAC einer Kennung des ausgewählten Dienst-Computersystems verwendet wird, wobei es sich bei der Kennung insbesondere um die URL der von dem Nutzer aufgerufenen Internetseite handelt.

9. Verfahren nach Anspruch 8, wobei durch das ID-Provider-Computersystem für jedes Dienst-Computersystem der Menge ein kryptografischer Schlüssel gespeichert wird, wobei das ID-Provider-Computersystem zur Ableitung des dem ausgewählten Dienst-Computersystem zugeordneten Pseudonyms auf den dem ausgewählten Dienst-Computersystem zugeordneten kryptografischen Schlüssel zugreift, um mit Hilfe dieses kryptografischen Schlüssels aus dem ID-Token-Pseudonym das dem ausgewählten Dienst-Computersystem zugeordnete Pseudonym abzuleiten.

10. Verfahren nach einem der vorhergehenden Ansprüche, wobei es sich bei der Anforderung um einen SAML-Request handelt, der einen Identifikator für die aufgrund des Aufrufs der Internetseite aufgebaute Session beinhaltet, wobei die Signierung des dem ausgewählten Dienst-Computersystem zugeordneten Pseudonyms durch das ID-Provider-Computersystem durch Erzeugung einer SAML-Response erfolgt, welche das abgeleitete dem ausgewählten Dienst-Computersystem zugeordnete Pseudonym und den Identifikator beinhaltet, wobei das ausgewählte Dienst-Computersystem die von dem ID-Provider-Computersystem empfangene SAML-Response anhand des Identifikators der Session zuordnet, wobei der SAML-Request insbesondere die Kennung des ausgewählten Dienst-Computersystems beinhaltet, und wobei das ID-Provider-Computersystem mit Hilfe der Kennung auf die dem Dienst-Computersystems zugeordnete Einwegfunktion zugreift, um aus dem ID-Token-Pseudonym das dem ausgewählten Dienst-Computersystem zugeordnete Pseudonym abzuleiten, und/oder wobei der Nutzer auf dem ausgewählten Dienst-Computersystem mit Hilfe des abgeleiteten dem ausgewählten Dienst-Computersystem zugeordneten Pseudonyms eingeloggt oder wiedererkannt wird, und/oder wobei der ID-Token als USB-Stick oder als Dokument ausgebildet ist, insbesondere als Wert- oder Sicherheitsdokument, insbesondere papierbasiert und/oder kunststoffbasiert, wie zum Beispiel als Ausweisdokument, insbesondere Reisepass, Personalausweis, Visum, Führerschein, Fahrzeugschein, Fahrzeugbrief, Firmenausweis, elektronische Gesundheitskarte oder anderes ID-Dokument, als Chipkarte, Zahlungsmittel, insbesondere Bankkarte, Kreditkarte oder Banknote, Frachtbrief oder sonstiger Berechtigungsnachweis.

11. Datenverarbeitungssystem mit einem ID-Provider-Computersystem (136), wobei das ID-Provider-Computersystem Folgendes aufweist:
- Mittel (138) zum Empfang einer Anforderung von einem ausgewählten Dienst-Computersystem einer Menge von Dienst-Computersystemen über ein Netzwerk (116),
- Mittel (146) zur Authentifizierung des ID-Provider-Computersystems gegenüber einem ID-Token eines Nutzers über das Netzwerk mit einem Zertifikat (144), welches einen öffentlichen Schlüssel eines zweiten asymmetrischen kryptografischen Schlüsselpaars beinhaltet und in dem eine Leseberechtigung des ID-Provider-Computersystems für einen Lesezugriff zum Lesen eines ID-Token-Pseudonyms (RID) definiert ist, wobei die Mittel zur Authentifizierung zur Übertragung des Zertifikats an den ID-Token über das Netzwerk ausgebildet sind, um die Erzeugung des ID-Token-Pseudonyms durch den ID-Token mittels einer kryptografische Ableitung des ID-Token-Pseudonyms aus einem privaten Schlüssel des ID-Tokens und dem öffentlichen Schlüssel des Zertifikats zu ermöglichen,
- Mittel (138, 148) zur Durchführung eines Lesezugriffs auf das ID-Token-Pseudonym des ID-Tokens über das Netzwerk mit Ende-zu-Ende-Verschlüsselung,
- Mittel (180) zur Erzeugung einer zufälligen Zeichenkette, durch welche ein virtuelles Pseudonym (vP) des Nutzers gebildet wird, die dem ID-Token-Pseudonym zugeordnet ist, wobei die zufällige Zeichenkette mindestens dieselbe oder eine höhere Entropie als das ID-Token-Pseudonym hat,
- Mittel (182, 186, 188) zur Speicherung des ID-Token-Pseudonyms mit dem zugeordneten virtuellen Pseudonym, sodass mit Hilfe des ID-Token-Pseudonyms das virtuelle Pseudonym durch das ID-Provider-Computersystem lesbar ist,
- Mittel (145) zum Lesen des virtuellen Pseudonyms des Nutzers mit Hilfe des über das Netzwerk empfangenen ID-Token-Pseudonym,
- Mittel (174) zur Ableitung eines dem ausgewählten Dienst-Computersystem zugeordneten Pseudonyms (RID') des Nutzers aus dem virtuellen Pseudonym des Nutzers mittels einer für das ausgewählte Dienst-Computersystem spezifischen kryptografischen Funktion, wobei jedem der Dienst-Computersysteme als spezifischen kryptografischen Funktion eine Einwegfunktion zugeordnet ist, und die Mittel zur Ableitung so ausgebildet sind, dass für die Ableitung des Pseudonyms auf die dem ausgewählten Dienst-Computersystem zugeordnete Einwegfunktion zugegriffen wird, um mit Hilfe dieser Einwegfunktion aus dem ID-Token-Pseudonym das Pseudonym abzuleiten,
- Mittel (144, 145) zur Signierung des abgeleiteten dem ausgewählten Dienst-Computersystem zugeordneten Pseudonyms durch das ID-Provider-Computersystem,
- Mittel (138) zur Übertragung des signierten dem ausgewählten Dienst-Computersystem zugeordneten Pseudonyms von dem ID-Provider-Computersystem an das ausgewählte Dienst-Computersystem über das Netzwerk.

12. Datenverarbeitungssystem nach Anspruch 11, wobei das ID-Provider-Computersystem ferner aufweist:
- Mittel (182, 138) zum Empfang einer Anforderung zur Initialisierung des virtuellen Pseudonyms von dem Nutzer-Computersystem des Nutzers,
- Mittel (182, 138) zur verschlüsselten Übertragung einer Nutzerkennung von dem Nutzer-Computersystem an das ID-Provider-Computersystem,
- Mittel (182, 138) zum Empfang des ID-Token-Pseudonyms von dem ID-Token mit Ende-zu-Ende-Verschlüsselung über das Netzwerk,
- Mittel (182) zur Speicherung des ID-Token-Pseudonyms mit dem zugeordneten virtuellen Pseudonym und der zugeordneten Nutzerkennung, sodass das ID-Provider-Computersystem mit Hilfe des ID-Token-Pseudonyms das virtuelle Pseudonym lesen kann und sodass das ID-Provider-Computersystem mit Hilfe der Nutzerkennung einen Schreibzugriff durchführen kann, um das ID-Token-Pseudonym zu aktualisieren, und/oder wobei das ID-Provider-Computersystem ferner aufweist:
- Mittel (184, 138) zum Empfang einer Anforderung zur Aktualisierung des ID-Token-Pseudonyms von dem Nutzer-Computersystem,
- Mittel (184, 138) zur verschlüsselten Übertragung der Nutzerkennung von dem Nutzer-Computersystem an das ID-Provider-Computersystem,
- Mittel (184, 138) zum Empfang des aktuellen ID-Token-Pseudonyms von dem Ersatz-ID-Token mit Ende-zu-Ende-Verschlüsselung über das Netzwerk,
- Mittel (184) zur Durchführung eines Schreibzugriffs auf den Speicher mit Hilfe der Nutzerkennung, um das ID-Token-Pseudonym durch das aktuelle ID-Token-Pseudonym zu ersetzen, und vorzugsweise mit Mitteln (172) zur Prüfung der Validität des ID-Token-Pseudonyms.

13. Datenverarbeitungssystem nach einem der Ansprüche 11 oder 12, wobei das ID-Provider-Computersystem einen elektronischen Speicher (140) hat, in dem für jedes Dienst-Computersystem der Menge ein kryptografischer Schlüssel gespeichert wird, wobei die Mittel zur Ableitung des Pseudonyms zum Zugriff auf den dem ausgewählten Dienst-Computersystem zugeordneten kryptografischen Schlüssel ausgebildet sind, um mit Hilfe dieses kryptografischen Schlüssels und der dem ausgewählten Dienst-Computersystem zugeordneten Einwegfunktion aus dem ID-Token-Pseudonym das Pseudonym abzuleiten, wobei die Mittel zur Ableitung insbesondere so ausgebildet sind, dass die Ableitung des Pseudonyms mit Hilfe eines Elliptic Curve Diffie Hellman (EC-DH) Verfahren erfolgt und das ID-Token-Pseudonym für die Durchführung des Elliptic Curve Diffie Hellman Verfahrens als geheimer Schlüssel dient, und/oder wobei die Mittel zur Ableitung insbesondere so ausgebildet sind, dass das Pseudonym durch Berechnung eines Hash-based Message Authentication Code (HMAC) abgeleitet wird, wobei das ID-Token-Pseudonym als geheimer Schlüssel zur Erzeugung des HMAC einer Kennung des ausgewählten Dienst-Computersystems verwendet wird, und/oder wobei es sich bei der Anforderung um einen SAML-Request handelt, der einen Identifikator für die aufgrund des Aufrufs der Internetseite aufgebaute Session beinhaltet, wobei die Mittel zur Signierung des Pseudonyms zur Erzeugung einer SAML-Response, welche das abgeleitete Pseudonym und den Identifikator beinhaltet, ausgebildet sind, um eine Zuordnung der SAML-Response zu der Session anhand des Identifikators durch das ausgewählte Dienst-Computersystem zu ermöglichen und/oder wobei der SAML-Request die Kennung des ausgewählten Dienst-Computersystems beinhaltet, und wobei die Mittel zur Ableitung dazu ausgebildet sind, mit Hilfe der Kennung auf die dem Dienst-Computersystems zugeordnete Einwegfunktion zugreifen, um aus dem ID-Token-Pseudonym das Pseudonym abzuleiten.

14. Datenverarbeitungssystem nach einem der Ansprüche 11 bis 13, mit dem ID-Token und/oder den Dienst-Computersystemen und/oder einem Nutzer-Computersystem, über welches der Lesezugriff des ID-Provider-Computersystem auf den ID-Token erfolgen kann.

15. Computerprogrammprodukt, insbesondere digitales Speichermedium, mit ausführbaren Instruktionen zur Durchführung eines Verfahrens nach einem der vorhergehenden Ansprüche 1 bis 10.

## Claims

1. A method for generating a pseudonym with the help of an ID token (106) for a user (102), wherein the ID token is assigned to the user and the ID token has a protected memory area (122) for storing at least one private key of a first asymmetric cryptographic key pair assigned to the ID token, and wherein the pseudonym of the user is assigned to a service computer system from a set of service computer systems (150, 150', 150", ...), said method having the following steps:
- calling up a website of one of the service computer systems, selected by the user, with a web browser (112) of a user computer system (100) via a network (116),
- generating a request (176) by the selected service computer system for the pseudonym of the user,
- transmitting the request from the service computer system to an ID provider computer system (136) via the network,
- generating an ID token pseudonym (RID) by the ID token by cryptographic derivation of the ID token pseudonym from the private key of the first asymmetric cryptographic key pair and a public key of a second asymmetric cryptographic key pair,
- temporarily storing the ID token pseudonym in the ID token,
- transmitting the ID token pseudonym from the ID token to the ID provider computer system with end-to-end encryption via the network,
- accessing a memory (186, 188) by the ID provider computer system with the help of the ID token pseudonym (RID) in order to read a virtual pseudonym (vP) of the user assigned to the ID token pseudonym, wherein the virtual pseudonym is a random string, which is generated by a random generator and which has at least the same or a higher entropy than the ID token pseudonym,
- deriving the pseudonym (RID') of the user assigned to the selected service computer system from the virtual pseudonym of the user by means of a cryptographic function specific for the selected service computer system by the ID provider computer system, wherein each of the service computer systems is assigned a one-way function as specific cryptographic function, so that the ID provider computer system, for derivation of the pseudonym (RID'), accesses the one-way function assigned to the selected service computer system in order to derive the pseudonym from the ID token pseudonym with the help of this one-way function,
- signing the derived pseudonym by the ID provider computer system,
- transmitting the signed pseudonym from the ID provider computer system to the selected service computer system via the network,
said method comprising the following further steps:
- authenticating the user to the ID token,
- authenticating the ID provider computer system to the ID token via the network with a certificate (144) which contains the public key of the second asymmetric cryptographic key pair assigned to the ID provider computer system and in which a read authorisation of the ID provider computer system for read access for reading the ID token pseudonym from the ID token is defined,
- following successful authentication of the user and of the ID provider computer system to the ID token, granting read access for the ID provider computer system via the network to the ID token pseudonym stored in the ID token,
wherein the ID token pseudonym is transmitted from the ID token to the ID provider computer system on account of the read access.

2. The method according to claim 1, wherein the random string has the same length as the ID token pseudonym.

3. The method according to claim 1 or 2, wherein at least one database table (188) for storing ID token pseudonyms of different users and the various assigned virtual pseudonyms is stored in the memory.

4. The method according to claim 3, wherein the at least one database table is configured such that it can be accessed by the ID provider computer system with the help of a user ID of the user in order to update the ID token pseudonym of the user in question in the at least one database table.

5. The method according to any one of the preceding claims, wherein the following steps are carried out in order to initialise the virtual pseudonym:
- transmitting a request for initialisation of the virtual pseudonym from the user computer system of the user to the ID provider computer system,
- transmitting a user ID from the user computer system to the ID provider computer system in an encrypted manner,
- generating the ID token pseudonym by the ID token of the user by cryptographically deriving the ID token pseudonym from the private key of the first asymmetric cryptographic key pair and the public key of the second asymmetric cryptographic key pair,
- temporarily storing the ID token pseudonym in the ID token,
- transmitting the ID token pseudonym from the ID token to the ID provider computer system with end-to-end encryption via the network,
- generating the virtual pseudonym of the user by the random generator,
- storing the ID token pseudonym with the assigned virtual pseudonym and the assigned user ID, so that the ID provider computer system can read the virtual pseudonym with the help of the ID token pseudonym, and so that the ID provider computer system can perform a write access with the help of the user ID in order to update the ID token pseudonym.

6. The method according to claim 5, wherein the following steps are carried out in order to update the ID token pseudonym:
- transmitting a request to update the ID token pseudonym from the user computer system to the ID provider computer system,
- transmitting the user ID from the user computer system to the ID provider computer system in an encrypted manner,
- generating the current ID token pseudonym by a replacement ID token of the user by cryptographically deriving the current ID token pseudonym from the current private key of an asymmetric cryptographic key pair of the replacement ID token and the public key of the second asymmetric cryptographic key pair,
- temporarily storing the current ID token pseudonym in the replacement ID token,
- transmitting the current ID token pseudonym from the replacement ID token to the ID provider computer system with end-to-end encryption via the network,
- granting write access to the memory by the ID provider computer system with the help of the user ID in order to replace the ID token pseudonym by the current ID token pseudonym.

7. The method according to any one of the preceding claims, comprising the following further step: checking the validity of the ID token pseudonym by the ID provider computer system, wherein the derivation or the generation of the virtual pseudonym or the updating of the ID token pseudonym is performed only if the transmitted ID token pseudonym is valid.

8. The method according to any one of the preceding claims, wherein the one-way function is a hash function or a trapdoor function, wherein the pseudonym is derived in particular with the help of an Elliptic Curve Diffie Hellman (EC-DH) method and the ID token pseudonym is used as a secret key for the execution of the Elliptic Curve Diffie Hellman method, or wherein the pseudonym is derived in particular by calculation of a Hash-based Message Authentication Code (HMAC), wherein the ID token pseudonym is used as a secret key for generating the HMAC of an identification of the selected service computer system, wherein the identification is in particular the URL of the website called up by the user.

9. The method according to claim 8, wherein a cryptographic key is stored by the ID provider computer system for each service computer system, wherein the ID provider computer system, for the derivation of the pseudonym assigned to the selected service computer system, accesses the cryptographic key assigned to the selected service computer system in order to derive the pseudonym assigned to the selected service computer system from the ID token pseudonym with the help of this cryptographic key.

10. The method according to any one of the preceding claims, wherein the request is an SAML request which includes an identifier for the session established on account of the calling up of the website, wherein the pseudonym assigned to the selected service computer system is signed by the ID provider computer system by generation of an SAML response, which contains the derived pseudonym, assigned to the selected service computer system, and the identifier, wherein the selected service computer system assigns the SAML response received from the ID provider computer system on the basis of the identifier of the session, wherein the SAML request contains in particular the identification of the selected service computer system, and wherein the ID provider computer system accesses the one-way function assigned to the service computer system with the help of the identification in order to derive the pseudonym assigned to the selected service computer system from the ID token pseudonym, and/or wherein the user is logged in or is recognised on the selected service computer system with the help of the derived pseudonym assigned to the selected service computer system, and/or wherein the ID token is configured as a USB stick or as a document, in particular as a value or security document, in particular paper-based and/or plastic-based, for example as an identification document, in particular a passport, personal identity card, visa, driver's license, vehicle registration certificate, corporate identity card, electronic health card or another ID document, as a chip card, payment means, in particular a bank card, credit card or bank note, consignment note or other proof of authorisation.

11. A data processing system having an ID provider computer system (136), wherein the ID provider computer system comprises the following:
- means (138) for receiving a request from a selected service computer system of a set of service computer systems via a network (116),
- means (146) for authentication of the ID provider computer system to an ID token of a user via the network with a certificate (144) which contains a public key of a second asymmetric cryptographic key pair and in which a read authorisation of the ID provider computer system for read access for reading an ID token pseudonym (RID) is defined, wherein the means for authentication are configured to transmit the certificate to the ID token via the network in order to enable the generation of the ID token pseudonym by the ID token by means of a cryptographic derivation of the ID token pseudonym from a private key of the ID token and the public key of the certificate,
- means (138, 148) for performing a read access to the ID token pseudonym of the ID token via the network with end-to-end encryption,
- means (180) for generating a random string, by which a virtual pseudonym (vP) of the user is formed and which is assigned to the ID token pseudonym, wherein the random string has at least the same or a higher entropy than the ID token pseudonym,
- means (182, 186, 188) for storing the ID token pseudonym with the assigned virtual pseudonym so that the virtual pseudonym can be read by the ID provider computer system with the help of the ID token pseudonym,
- means (145) for reading the virtual pseudonym of the user with the help of the ID token pseudonym received via the network,
- means (174) for derivation of a pseudonym (RID') of the user assigned to the selected service computer system from the virtual pseudonym of the user by means of a cryptographic function specific for the selected service computer system, wherein a one-way function is assigned to each of the service computer systems as specific cryptographic function, and the means for derivation are configured such that, for the derivation of the pseudonym, the one-way function assigned to the selected service computer system is accessed in order to derive the pseudonym from the ID token pseudonym with the help of this one-way function,
- means (144, 145) for signing the derived pseudonym, assigned to the selected service computer system, by the ID provider computer system,
- means (138) for transmitting the signed pseudonym assigned to the selected service computer system from the ID provider computer system to the selected service computer system via the network.

12. The data processing system according to claim 11, wherein the ID provider computer system further comprises:
- means (182, 138) for receiving a request to initialise the virtual pseudonym from the user computer system of the user,
- means (182, 138) for transmitting a user ID from the user computer system to the ID provider computer system in an encrypted manner,
- means (182, 138) for receiving the ID token pseudonym from the ID token with end-to-end encryption via the network,
- means (182) for storing the ID token pseudonym with the assigned virtual pseudonym and the assigned user ID so that the ID provider computer system can read the virtual pseudonym with the help of the ID token, and so that the ID provider computer system can perform a write access with the help of the user ID in order to update the ID token pseudonym, and/or wherein the ID provider computer system also comprises:
- means (184, 138) for receiving a request to update the ID token pseudonym from the user computer system,
- means (184, 138) for transmitting the user ID from the user computer system to the ID provider computer system in an encrypted manner,
- means (184, 138) for receiving the current ID token pseudonym from the replacement ID token with end-to-end encryption via the network,
- means (184) or performing a write access to the memory with the help of the user ID in order to replace the ID token pseudonym by the current ID token pseudonym, and preferably with means (172) the checking the validity of the ID token pseudonym.

13. The data processing system according to either one of claims 11 or 12, wherein the ID provider computer system has an electronic memory (140), in which a cryptographic key is stored for each service computer system of the set, wherein the means for deriving the pseudonym are configured to access the cryptographic key assigned to the selected service computer system in order to derive the pseudonym from the ID token pseudonym with the help of this cryptographic key and the one-way function assigned to the selected service computer system, wherein the means or derivation are configured in particular such that the pseudonym is derived with the help of an Elliptic Curve Diffie Hellman (EC-DH) method and the ID token pseudonym is used as a secret key for the execution of the Elliptic Curve Diffie Hellman method, and/or wherein the means for derivation are configured in particular so that the pseudonym is derived by calculation of a Hash-based Message Authentication Code (HMAC), wherein the ID token pseudonym is used as a secret key for generating the HMAC of an identification of the selected service computer system, and/or wherein the request is an SAML request which includes an identifier for the session established on account of the calling up of the website, wherein the means for signing the pseudonym are configured to generate an SAML response, which contains the derived pseudonym and the identifier, in order to enable an assignment of the SAML response to the session by the selected service computer system on the basis of the identifier, and/or wherein the SAML request contains the identification of the selected service computer system, and wherein the means for derivation are configured to access the one-way function assigned to the service computer system with the help of the identification in order to deride the pseudonym from the ID token pseudonym.

14. The data processing system according to any one of claims 11 to 13, with the ID token and/or the service computer systems and/or a user computer system via which the ID provider computer system can perform read access to the ID token.

15. A computer program product, in particular a digital storage medium, with executable instructions for carrying out a method according to any one of preceding claims 1 to 10.

## Revendications

1. Procédé de création d'un pseudonyme à l'aide d'un jeton d'ID (106) pour un utilisateur (102), où le jeton d'ID est associé à l'utilisateur et le jeton d'ID présente une zone de mémoire (122) sécurisée pour le stockage d'au moins une clé privée d'une première paire de clés cryptographiques asymétrique associée au jeton d'ID, et où le pseudonyme de l'utilisateur est associé à un système informatique de service parmi une quantité de systèmes informatiques de service (150, 150', 150"), avec les étapes suivantes :
- l'appel d'une page internet d'un des systèmes informatiques de service choisi par l'utilisateur avec un navigateur internet (112) d'un système informatique d'utilisateur (100) par le biais d'un réseau (116),
- la création d'une demande (176) par le système informatique de service choisi pour le pseudonyme de l'utilisateur,
- la transmission de la demande du système informatique de service à un système informatique de fournisseur d'ID (136) par le biais du réseau,
- la création d'un pseudonyme de jeton d'ID (RID) par le jeton d'ID par une dérivation cryptographique du pseudonyme de jeton d'ID à partir de la clé privée de la première paire de clés cryptographiques asymétrique et d'une clé publique d'une deuxième paire de clés cryptographiques asymétrique,
- le stockage temporaire du pseudonyme de jeton d'ID dans le jeton d'ID,
- la transmission du pseudonyme de jeton d'ID du jeton d'ID au système informatique de fournisseur d'ID avec un chiffrement de bout en bout par le biais du réseau,
- l'accès à une mémoire (186, 188) par le système informatique de fournisseur d'ID à l'aide du pseudonyme de jeton d'ID (RID) afin de lire un pseudonyme virtuel (vP) de l'utilisateur associé au pseudonyme de jeton d'ID, où, dans le cas du pseudonyme virtuel, il s'agit d'une chaîne de caractères aléatoire générée par un générateur aléatoire qui a au moins la même entropie ou une entropie plus élevée que le pseudonyme de jeton d'ID,
- la dérivation du pseudonyme (RID') de l'utilisateur associé au système informatique de service choisi à partir du pseudonyme virtuel de l'utilisateur au moyen d'une fonction cryptographique spécifique au système informatique de service choisi par le système informatique de fournisseur d'ID, où, à chacun des systèmes informatique de service est associée une fonction unidirectionnelle en tant que fonction cryptographique spécifique de sorte que le système informatique de fournisseur d'ID emploie la fonction unidirectionnelle associée au système informatique de service choisi pour la dérivation du pseudonyme (RID') afin de dériver le pseudonyme à partir du pseudonyme de jeton d'ID à l'aide de cette fonction unidirectionnelle,
- la signature du pseudonyme dérivé par le système informatique de fournisseur d'ID,
- la transmission du pseudonyme signé par le système informatique de fournisseur d'ID au système informatique de service choisi par le biais du réseau,
avec les autres étapes suivantes :
- l'authentification de l'utilisateur vis-à-vis du jeton d'ID,
- l'authentification du système informatique de fournisseur d'ID vis-à-vis du jeton d'ID par le biais du réseau avec un certificat (144), lequel contient la clé publique de la deuxième paire de clés cryptographiques asymétrique qui est associée au système informatique de fournisseur d'ID, et en ce qu'une autorisation de lecture du système informatique de fournisseur d'ID est définie à partir du jeton d'ID,
- après l'authentification réussie de l'utilisateur et du système informatique de fournisseur d'ID vis-à-vis du jeton d'ID, l'accès en lecture du système informatique de fournisseur d'ID au pseudonyme de jeton d'ID stocké dans le jeton d'ID par le biais du réseau,
où, suite à l'accès en lecture, la transmission du pseudonyme de jeton d'ID a lieu du jeton d'ID vers le système informatique de fournisseur d'ID.

2. Procédé selon la revendication 1, dans lequel la chaîne de caractères aléatoire a la même longueur que le pseudonyme d'ID.

3. Procédé selon la revendication 1 ou la revendication 2, dans lequel au moins un tableau de banque de données (188) est stocké dans la mémoire pour le stockage de pseudonymes de jetons d'ID de divers utilisateurs et des pseudonymes virtuels respectivement associés.

4. Procédé selon la revendication 3, dans lequel l'au moins un tableau de banque de données est conçu de telle manière qu'on peut y avoir accès par le système informatique de fournisseur d'ID à l'aide d'un identifiant d'utilisateur des utilisateurs afin de mettre à jour le pseudonyme de jeton d'ID de l'utilisateur concerné dans l'au moins un tableau de banque de données.

5. Procédé selon l'une des revendications précédentes, dans lequel, pour l'initialisation du pseudonyme virtuel les étapes suivantes sont exécutées :
- la transmission d'une demande pour l'initialisation du pseudonyme virtuel du système informatique d'utilisateur de l'utilisateur au système informatique de fournisseur d'ID,
- la transmission chiffrée d'un identifiant d'utilisateur du système informatique d'utilisateur au système informatique de fournisseur d'ID,
- la création du pseudonyme de jeton d'ID par le jeton d'ID de l'utilisateur par une dérivation cryptographique du pseudonyme de jeton d'ID à partir de la clé privée de la première paire de clés cryptographiques asymétrique et de la clé publique de la deuxième paire de clés cryptographiques asymétrique,
- le stockage temporaire du pseudonyme de jeton d'ID dans le jeton d'ID,
- la transmission du pseudonyme de jeton d'ID du jeton d'ID au système informatique de fournisseur d'ID avec un chiffrement de bout en bout par le biais du réseau,
- la création du pseudonyme virtuel de l'utilisateur par le générateur aléatoire,
- le stockage du pseudonyme de jeton d'ID avec le pseudonyme virtuel associé et l'identifiant d'utilisateur associé de sorte que le système informatique de fournisseur d'ID puisse lire le pseudonyme virtuel à l'aide du pseudonyme de jeton d'ID et de sorte que le système informatique de fournisseur d'ID puisse exécuter un accès en écriture à l'aide de l'identifiant d'utilisateur afin de mettre le pseudonyme de jeton d'ID à jour.

6. Procédé selon la revendication 5, dans lequel, pour la mise à jour du pseudonyme de jeton d'ID, les étapes suivantes sont exécutées :
- la transmission d'une demande pour la mise à jour du pseudonyme de jeton d'ID du système informatique d'utilisateur au système informatique de fournisseur d'ID,
- la transmission chiffrée de l'identifiant d'utilisateur du système informatique d'utilisateur au système informatique de fournisseur d'ID,
- la création du pseudonyme de jeton d'ID actuel par un jeton d'ID de remplacement de l'utilisateur par une dérivation cryptographique du pseudonyme de jeton d'ID actuel à partir de la clé privée actuelle d'une paire de clés cryptographiques asymétrique du jeton d'ID de remplacement et de la clé publique de la deuxième paire de clés cryptographiques asymétrique,
- le stockage temporaire du pseudonyme de jeton d'ID actuel dans le jeton d'ID de remplacement,
- la transmission du pseudonyme de jeton d'ID actuel du jeton d'ID de remplacement au système informatique de fournisseur d'ID avec un chiffrement de bout en bout par le biais du réseau,
- l'accès en écriture dans la mémoire par le système informatique de fournisseur d'ID à l'aide de l'identifiant d'utilisateur afin de remplacer le pseudonyme de jeton d'ID par le pseudonyme de jeton d'ID actuel.

7. Procédé selon l'une des revendications précédentes, avec la nouvelle étape suivante : la vérification du pseudonyme de jeton d'ID par le système informatique de fournisseur d'ID, où la dérivation, ou la création du pseudonyme virtuel, ou la mise à jour du pseudonyme de jeton d'ID, n'a lieu que si le pseudonyme de jeton d'ID transmis est valide.

8. Procédé selon l'une des revendications précédentes, dans lequel, dans le cas de la fonction unidirectionnelle, il s'agit d'une fonction de hachage ou d'une fonction à trappe, où la dérivation du pseudonyme a lieu en particulier à l'aide d'un procédé de courbe elliptique de Diffie Hellman (EC-DH) et le pseudonyme de jeton d'ID sert de clé privée pour l'exécution du procédé de courbe elliptique de Diffie Hellman et où le pseudonyme est en particulier dérivé par le calcul d'un code d'authentification de message basé sur un hachage (HMAC), où le pseudonyme de jeton d'ID est employé en tant que clé privée pour la création du HMAC d'un identifiant du système informatique de service choisi, où, dans le cas de l'identifiant, il s'agit de l'URL de la page internet appelée par l'utilisateur.

9. Procédé selon la revendication 8, dans lequel, pour chacun des systèmes informatiques de service dans la quantité, une clé cryptographique est stockée par le système informatique de fournisseur d'ID, où le système informatique de fournisseur d'ID utilise la clé cryptographique associée au système informatique de service choisi pour la dérivation du pseudonyme associé au système informatique de service choisi afin de dériver le pseudonyme associé au système informatique de service choisi avec l'aide de cette clé cryptographique à partir du pseudonyme de jeton d'ID.

10. Procédé selon l'une des revendications précédentes, dans lequel, dans le cas de la demande, il s'agit d'une requête SAML qui contient un identificateur pour la session établie suite à l'appel de la page internet, où la signature du pseudonyme associé au système informatique de service choisi a lieu par la création, par le système informatique de fournisseur d'ID, d'une réponse SAML, laquelle contient le pseudonyme dérivé associé au système informatique de service choisi et l'identificateur, où le système informatique de service choisi associe la réponse SAML reçue du système informatique de fournisseur d'ID à la session à l'aide de l'identificateur, où la requête SAML contient en particulier l'identifiant du système informatique de service choisi, et où le système informatique de fournisseur d'ID utilise la fonction unidirectionnelle associée au système informatique de service à l'aide de l'identifiant afin de dériver le pseudonyme associé au système informatique de service choisi à partir du pseudonyme de jeton d'ID, et/ou où l'utilisateur peut se connecter ou est reconnu par le système informatique de service choisi à l'aide du pseudonyme dérivé associé au système informatique de service choisi, et/ou où le jeton d'ID est conçu en tant que clé USB ou en tant que document, notamment en tant que document de valeur ou de sécurité, en particulier à base de papier et/ou de matière plastique, comme, par exemple, sous forme d'un document d'identité, notamment de passeport, de carte d'identité personnelle, de visa, de permis de conduire, de carte d'immatriculation de véhicule, de lettre de véhicule, de carte d'entreprise, de carte de santé électronique ou d'un autre document d'ID, sous forme de carte à puce, de moyen de paiement, notamment de carte bancaire, de carte de crédit ou de billet de banque, de lettre de transport ou d'un autre document d'autorisation.

11. Système de traitement de données doté d'un système informatique de fournisseur d'ID (136), dans lequel le système informatique de fournisseur d'ID présente ce qui suit :
- des moyens (138) de réception d'une demande provenant d'un système informatique de service choisi parmi une grande quantité de systèmes informatiques de service par le biais d'un réseau (116),
- des moyens (146) d'authentification du système informatique de fournisseur d'ID vis-à-vis d'un jeton d'ID d'un utilisateur par le biais du réseau avec un certificat (144), lequel contient une clé publique d'une deuxième paire de clés cryptographiques asymétrique et dans lequel une autorisation de lecture du système informatique de fournisseur d'ID est définie pour un accès à la lecture d'un pseudonyme de jeton d'ID (RID), où les moyens d'authentification sont conçus pour la transmission du certificat au jeton d'ID par le biais du réseau afin de permettre la création du pseudonyme de jeton d'ID par le jeton d'ID au moyen d'une dérivation cryptographique du pseudonyme de jeton d'ID à partir d'une clé privée du jeton d'ID et de la clé publique du certificat,
- des moyens (138, 148) d'exécution d'un accès en lecture du pseudonyme de jeton d'ID du jeton d'ID par le biais du réseau avec un chiffrement de bout en bout,
- des moyens (180) de création d'une chaîne de caractères aléatoire par laquelle un pseudonyme virtuel (vP) de l'utilisateur est formé, qui est associée au pseudonyme de jeton d'ID, où la chaîne de caractères aléatoire a au moins la même entropie ou une entropie plus élevée que le pseudonyme de jeton d'ID,
- des moyens (182, 186, 188) de stockage du pseudonyme de jeton d'ID avec le pseudonyme virtuel associé de sorte qu'à l'aide du pseudonyme de jeton d'ID le pseudonyme virtuel est rendu lisible par le système informatique de fournisseur d'ID,
- des moyens (145) de lecture du pseudonyme virtuel de l'utilisateur à l'aide du pseudonyme de jeton d'ID reçu par le biais du réseau,
- des moyens (174) de dérivation d'un pseudonyme associé au système informatique de service choisi (RID') de l'utilisateur à partir du pseudonyme virtuel de l'utilisateur au moyen d'une fonction cryptographique spécifique au système informatique de service choisi, où une fonction unidirectionnelle est associée à chacun des systèmes informatiques de service en tant que fonction cryptographique spécifique, et les moyens de dérivation sont conçus de telle manière que, pour la dérivation du pseudonyme, on utilise la fonction unidirectionnelle associée au système informatique de service choisi afin de dériver le pseudonyme à partir du pseudonyme de jeton d'ID à l'aide de cette fonction unidirectionnelle,
- des moyens (144, 145) de signature du pseudonyme dérivé associé au système informatique de service choisi par le système informatique de fournisseur d'ID,
- des moyens (138) de transmission du pseudonyme signé associé au système informatique de service choisi à partir du système informatique de fournisseur d'ID au système informatique de service choisi par le biais du réseau.

12. Système de traitement de données selon la revendication 11, dans lequel le système informatique de fournisseur d'ID présente en outre :
- des moyens (182, 138) de réception d'une demande d'initialisation du pseudonyme virtuel à partir du système informatique d'utilisateur de l'utilisateur,
- des moyens (182, 138) de transmission chiffrée d'un identifiant d'utilisateur du système informatique d'utilisateur au système informatique de fournisseur d'ID,
- des moyens (182, 138) de réception du pseudonyme de jeton d'ID à partir du jeton d'ID avec un chiffrement de bout en bout par le biais du réseau,
- des moyens (182) de stockage du pseudonyme de jeton d'ID avec un pseudonyme virtuel associé et l'identifiant d'utilisateur associé de sorte que le système informatique de fournisseur d'ID puisse lire le pseudonyme virtuel à l'aide du pseudonyme de jeton d'ID et que le système informatique de fournisseur d'ID puisse exécuter un accès en écriture à l'aide de l'identifiant d'utilisateur afin de mettre à jour le pseudonyme de jeton d'ID, et/ou où le système informatique de fournisseur d'ID présente en outre :
- des moyens (184, 138) de réception d'une demande de mise à jour du pseudonyme de jeton d'ID par le système informatique d'utilisateur,
- des moyens (184, 138) de transmission chiffrée de l'identifiant d'utilisateur du système informatique d'utilisateur au système informatique de fournisseur d'ID,
- des moyens (184, 138) de réception du pseudonyme de jeton d'ID actuel à partir du jeton d'ID de remplacement avec un chiffrement de bout en bout par le biais du réseau,
- des moyens (184) d'exécution d'un accès en écriture dans la mémoire à l'aide de l'identifiant d'utilisateur, afin de remplacer le pseudonyme de jeton d'ID par le pseudonyme de jeton d'ID actuel et de préférence avec des moyens (172) de vérification de la validité du pseudonyme de jeton d'ID.

13. Système de traitement de données selon l'une des revendications 11 ou 12, dans lequel le système informatique de fournisseur d'ID a une mémoire électronique (140) dans laquelle, pour chaque système informatique de service dans la quantité, une clé cryptographique est stockée, où les moyens de dérivation du pseudonyme sont conçus pour utiliser la clé cryptographique associée au système informatique de service choisi afin de dériver le pseudonyme à partir du pseudonyme de jeton d'ID à l'aide de cette clé cryptographique et de la fonction unidirectionnelle associée au système informatique de service choisi, où les moyens de dérivation sont en particulier conçus de telle manière que la dérivation du pseudonyme a lieu à l'aide du procédé de courbe elliptique de Diffie Hellman (EC-DH) et le pseudonyme de jeton d'ID sert de clé privée pour l'exécution du procédé de courbe elliptique de Diffie Hellman, et/ou où les moyens de dérivation sont en particulier conçus de telle manière que le pseudonyme est dérivé par le calcul d'un code d'authentification de message basé sur un hachage (HMAC), où le pseudonyme de jeton d'ID est employé en tant que clé privée pour la création du HMAC d'un identifiant du système informatique de service choisi, et/ou où, dans le cas de la demande, il s'agit d'une requête SAML qui contient un identificateur pour la session établie suite à l'appel de la page internet, où les moyens de signature du pseudonyme sont conçus pour la création d'une réponse SAML, laquelle contient le pseudonyme dérivé et l'identificateur, afin de permettre une association de la réponse SAML avec la session à l'aide de l'identificateur par le système informatique de service choisi, et/ou où la requête SAML contient l'identifiant du système informatique de service choisi, et où les moyens de dérivation sont conçus pour utiliser la fonction unidirectionnelle associée au système informatique de service à l'aide de l'identifiant afin de dériver le pseudonyme à partir du pseudonyme de jeton d'ID.

14. Système de traitement de données selon l'une des revendications 11 à 13, doté du jeton d'ID et/ou des systèmes informatiques de service, et/ou d'un système informatique d'utilisateur, par le biais duquel l'accès en lecture du système informatique de fournisseur d'ID peut avoir lieu dans le jeton d'ID.

15. Produit-programme informatique, notamment support de stockage numérique, avec des instructions exécutables pour l'exécution d'un procédé selon l'une des revendications précédentes 1 à 10.
